(19) Europäisches Patentamt
European Patent Office
Office européen des brevets

(11) EP 4 625 356 A1

(12) EUROPEAN PATENT APPLICATION

(43) Date of publication:
**01.10.2025 Bulletin 2025/40**

(21) Application number: **24382332.5**

(22) Date of filing: **27.03.2024**

(51) International Patent Classification (IPC):
***G06V 10/82*** *(2022.01)* ***G06V 30/41*** *(2022.01)*
***G06V 30/413*** *(2022.01)*

(52) Cooperative Patent Classification (CPC):
**G06V 10/82; G06V 30/41; G06V 30/413**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(71) Applicant: **FUJITSU LIMITED**
**Kawasaki-shi, Kanagawa 211-8588 (JP)**

(72) Inventor: **GARCIA SANTA, Nuria**
**28231 Las Rozas de Madrid (Madrid) (ES)**

(74) Representative: **Haseltine Lake Kempner LLP**
**Cheapside House**
**138 Cheapside**
**London EC2V 6BJ (GB)**

Remarks:
Amended claims in accordance with Rule 137(2) EPC.

# (54) IMAGE ANALYSIS AND PROCESSING

(57) A computer-implemented method comprising performing an image analysis process based on an image of a physical document, the image analysis process comprising: extracting from the image sub-images of sections of the physical document; and for each sub-image, extracting text in the sub-image using optical character recognition, OCR, classifying, based on the sub-image and the text in the sub-image and using a transformer-based machine learning, ML, model, the sub-image as corresponding to a label among a set of labels; generating, based on the sub-image and based on the text in the sub-image and using a neural network, a textual summary of the text in the sub-image; and outputting the labels of the sub-images and, in response to selection of at least one label by a user, outputting the corresponding at least one textual summary.

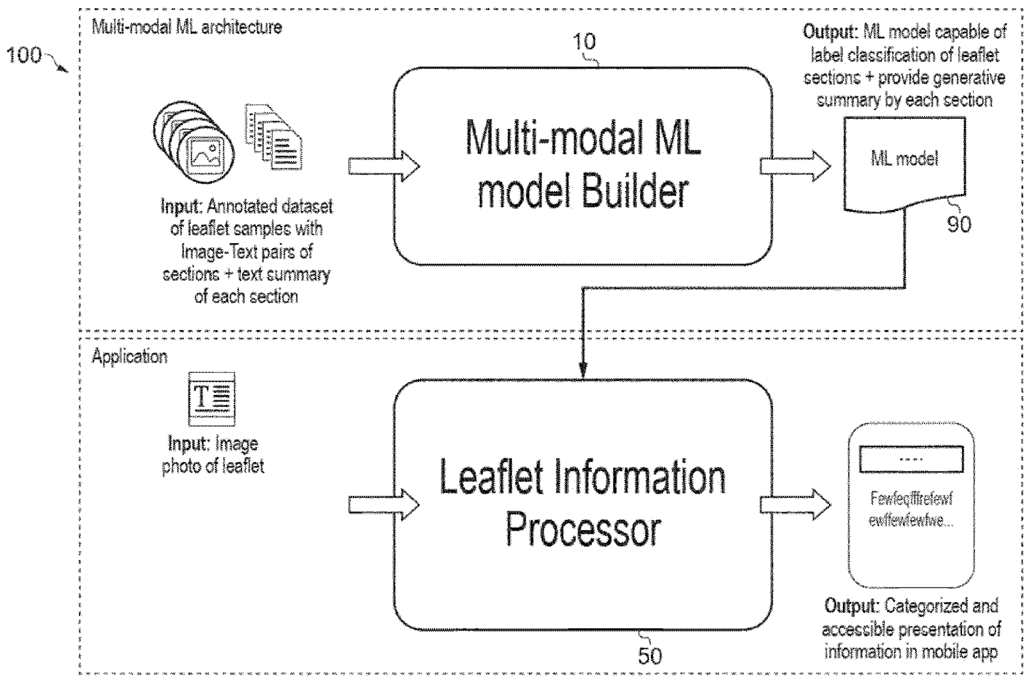


FIGURE 1



Processed by Luminess, 75001 PARIS (FR)

## Description

The present invention relates to image analysis and processing, and in particular to a computer-implemented method, a computer program, an information programming apparatus, and a system. More particularly, the present invention relates to processing images of physical items/documents.

In 2022, more than two billion people suffered near or distance vision impairment. The majority of people with vision impairment and blindness are over the age of 50 years (https://www.who.int/news-room/fact-sheets/detail/blindness-and-visual-impairment).

Since during the last decades the ageing population in many countries is increasing notoriously, the issues related with visual disabilities will be more relevant, needing more attention and resources. Besides, nowadays, there is an estimation of 14% worldwide of illiteracy population. This means at least 763 million adults still cannot read and write (https://www.unesco.org/en/literacy/need-know).

Together with vision impairment, illiteracy issues and other kinds of disabilities that obstruct reading skills such as mental or neurological disorders, there are billions of people that require specific assisted tools for daily activities.

Therefore, enhancing the accessibility and comprehension of relevant information contained in e.g. leaflets is beneficial for the population with vision impairment, illiteracy issues and other kinds of disabilities that obstruct reading skills. In light of the above, an image analysis and processing method is desired.

According to an embodiment of a first aspect there is disclosed herein a computer-implemented method comprising performing an image analysis process based on an image of a physical document, the image analysis process comprising: extracting from the image sub-images of sections of the physical document; and for each sub-image, extracting text in the sub-image using optical character recognition, OCR, classifying, based on the sub-image and the text in the sub-image and using a (trained) transformer-based machine learning, ML, model, the sub-image as corresponding to a label among a set of labels (the labels corresponding to possible sections in the document); generating, based on the sub-image and based on the text in the sub-image and using a (trained) neural network, a textual summary of the text in the sub-image; and outputting the labels of the sub-images (as section names) and, in response to selection of at least one label by a user, outputting the corresponding at least one textual summary.

According to an embodiment of a second aspect there is disclosed herein a computer-implemented method comprising performing an image analysis process based on an image of a physical document, the image analysis process comprising: extracting from the image sub-images of sections of the physical document; and for each sub-image, extracting text in the sub-image using optical character recognition, OCR, classifying, based on the sub-image and the text in the sub-image and using a (trained) transformer-based machine learning, ML, model, the sub-image as corresponding to a label among a set of labels; and outputting the labels of the sub-images and, in response to selection of at least one label by a user, outputting the text in the corresponding sub-image.

According to an embodiment of a third aspect there is disclosed herein a computer-implemented method comprising performing a first training process based on training data, the first training process comprising: classifying, based on a training image of a physical document and based on text in the training image and using a transformer-based machine learning, ML, model, the training image as corresponding to a label among a set of labels; and comparing the label to which the training image was classified as corresponding with a training label associated with the training image in the training data and adjusting, based on the comparison, at least one weight of the transformer-based ML model, and performing a second training process based on the training data, the second training process comprising: generating, based on the training image of the physical document and based on the text in the training image and using a neural network, a textual summary of the text in the training image; and comparing the textual summary with a training textual summary associated with the training image in the training data and adjusting, based on the comparison, at least one weight of the neural network.

According to an embodiment of a fourth aspect there is disclosed herein a computer-implemented method comprising performing a training process based on training data, the training process comprising: classifying, based on a training image of a physical document and based on text in the training image and using a transformer-based machine learning, ML, model, the training image as corresponding to a label among a set of labels; generating, based on the training image of the physical document and based on the text in the training image and using a neural network, a textual summary of the text in the training image; comparing the label to which the training image was classified as corresponding with a training label associated with the training image in the training data, and adjusting, based on the comparison, at least one weight of the transformer-based ML model; and comparing the textual summary with a training textual summary associated with the training image in the training data, and adjusting, based on the comparison, at least one weight of the neural network.

The transformer-based ML model may have been trained on training data comprising training images (or sub-images) of physical document and text therein and corresponding respective training labels.

The neural network may have been trained on training data comprising training images (or sub-images) of physical document and text therein and corresponding respective training textual summaries.

The transformer-based ML model may have been trained according to a first training process based on training data, the first training process comprising: classifying, based on a training image of a physical document and based on text in the training image and using the transformer-based ML model, the training image as corresponding to a label among a set of labels; and comparing the label to which the training image was classified as corresponding with a training label associated with the training image in the training data and adjusting, based on the comparison, at least one weight of the transformer-based ML model, and wherein the neural network has been trained according to a second training process based on the training data, the second training process comprising: generating, based on the training image of the physical item and based on the text in the training image and using a neural network, a textual summary of the text in the training image; and comparing the textual summary with a training textual summary associated with the training image in the training data and adjusting, based on the comparison, at least one weight of the neural network.

The transformer-based ML model may have been trained according to a first training process based on training data, the first training process comprising: classifying, based on a training image of a physical document and based on text in the training image and using the transformer-based ML model, the training image as corresponding to a label among a set of labels; and comparing the label to which the training image was classified as corresponding with a training label associated with the training image in the training data and adjusting, based on the comparison, at least one weight of the transformer-based ML model.

The neural network may have been trained according to a second training process based on training data, the second training process comprising: generating, based on a training image of a physical document and based on text in the training image and using a neural network, a textual summary of the text in the training image; and comparing the textual summary with a training textual summary associated with the training image in the training data and adjusting, based on the comparison, at least one weight of the neural network.

The transformer-based ML model and the neural network may have been trained according to a training process based on training data, the training process comprising: classifying, based on a training image of a physical document and based on text in the training image and using the transformer-based ML model, the training image as corresponding to a label among a set of labels; generating, based on the training image of the physical document and based on the text in the training image and using the neural network, a textual summary of the text in the training image; comparing the label to which the training image was classified as corresponding with a training label associated with the training image in the training data, and adjusting, based on the comparison, at least one weight of the transformer-based ML model; and comparing the textual summary with a training textual summary associated with the training image in the training data, and adjusting, based on the comparison, at least one weight of the neural network.

The computer-implemented may comprise, before performing the image analysis process, performing first and second training processes to train the transformer-based ML model and the neural network, respectively, based on training data, wherein the first training process comprises: classifying, based on a training image of a physical document and based on text in the training image and using the transformer-based machine learning, ML, model, the training image as corresponding to a label among a set of labels; and comparing the label to which the training image was classified as corresponding with a training label associated with the training image in the training data and adjusting, based on the comparison, at least one weight of the transformer-based ML model, wherein the second training process comprises: generating, based on the training image of the physical document and based on the text in the training image and using a neural network, a textual summary of the text in the training image; and comparing the textual summary with a training textual summary associated with the training image in the training data and adjusting, based on the comparison, at least one weight of the neural network.

The computer-implemented may comprise, before performing the image analysis process, performing a training process to train the transformer-based ML model and the neural network, based on training data, the training process comprising: classifying, based on a training image of a physical document and based on text in the training image and using the transformer-based ML model, the training image as corresponding to a label among a set of labels; generating, based on the training image of the physical document and based on the text in the training image and using the neural network, a textual summary of the text in the training image; comparing the label to which the training image was classified as corresponding with a training label associated with the training image in the training data, and adjusting, based on the comparison, at least one weight of the transformer-based ML model; and comparing the textual summary with a training textual summary associated with the training image in the training data, and adjusting, based on the comparison, at least one weight of the neural network.

The training image may be of a section of the physical document.

The training image may be a sub-image of a section of the physical document.

The transformer-based ML model and the neural network may have been trained by iterating/repeating the first and second training process or by iterating the training process until the comparison(s) indicate loss convergence or until a threshold number of iterations has been reached.

The transformer-based ML model may have been trained by iterating/repeating the first training process until the comparison indicates loss convergence or until a threshold number of iterations have been performed.

The neural network may have been trained by iterating/repeating the second training process until the comparison indicates loss convergence or until a threshold number of iterations have been performed.

The computer-implemented may comprise iterating/repeating the first training process until the comparison indicates loss convergence or until a threshold number of iterations have been performed.

The computer-implemented may comprise iterating/repeating the second training process until the comparison indicates loss convergence or until a threshold number of iterations have been performed.

The computer-implemented may comprise iterating/repeating the training process until the comparison indicates loss convergence or until a threshold number of iterations have been performed.

The training data may comprise a plurality of training images (or sub-images) of a plurality of physical documents and wherein each iteration of the first/second training process (or the training process) comprises using a different training image.

Comparing the generated textual summary with the training textual summary may comprise using a discriminator to attempt to discriminate between the generated textual summary and the training textual summary.

The discriminator may comprise a long-short-term-memory (LSTM) neural network (or a bidirectional long-short-term-memory (Bi-LSTM) neural network).

Comparing the generated textual summary with the training textual summary may comprise generating a textual summary text embedding of the training textual summary for input to the discriminator.

The discriminator may have been trained, before the second training process, to discriminate between training and generated textual summaries (or wherein the computer-implemented method comprises, before the second training process, training the discriminator to discriminate between training and generated textual summaries).

The discriminator may have been trained according to a discriminator training process before the second training process (or wherein the computer-implemented method may comprise performing, before the second training process, a discriminator training process), the discriminator training process comprising using the discriminator to estimate whether a textual summary among a plurality of (corresponding) generated and training textual summaries is a generated textual summary or a training textual summary and updating at least one weight of the discriminator when the estimation is incorrect.

Comparing the label to which the training image was classified as corresponding with the training label may comprise computing a categorical cross entropy loss.

The transformer-based ML model may comprise: an image encoder to extract an image embedding of the sub-image (or of the training image); a (first) text encoder to extract a text embedding of the text in the sub-image (or in the training image); and a transformer to generate, based on the image embedding and the text embedding, a prediction of the label for the sub-image (or training image).

The transformer may output a correlated matrix of features and the transformer-based ML model may comprise a softmax layer to convert the correlated matrix of features into a probability distribution across the set of labels (wherein the label with the highest associated probability is the predicted label for the sub-image (or the training image)).

The transformer may comprise a transformer encoder.

The transformer may comprise (at least one layer comprising) at least one multi-head attention stage and at least one multi-layer perceptron, MLP.

The transformer may comprise a first layer normalization stage before the at least one multi-head attention stage and a second layer normalization stage before the MLP.

The transformer may comprise a plurality of said layers.

Generating the textual summary may comprise using the correlated matrix of features output by the transformer as input to the neural network.

The neural network may comprise at least one of a convolutional neural network, a long-short-term-memory network, and a large language model.

Outputting the labels may comprise causing a display to display the labels and outputting the at least one textual summary may comprise causing the display to display the at least one textual summary.

Outputting the labels may comprise (using a text-to-speech model) causing a speaker to speak aloud the labels and outputting the at least one textual summary may comprise (using a text-to-speech model) causing a speaker to speak aloud the at least one textual summary, and the computer-implemented method may comprise receiving user input comprising a voice to select the at least one label.

The receiving the user input comprising a voice may comprise using a microphone to receive sound of the voice and converting the sound to text.

The physical document may comprise an instruction note or leaflet for medication or a medication container.

The physical document may comprise a form or contract.

The labels of the set of labels may correspond to (predefined) possible sections of the physical document.

The set of labels may comprise a plurality of: drug name; intake; dosage; side effects; questions; recommendations; contact; instructions; description; composition; other.

According to an embodiment of a fifth aspect there is disclosed herein a computer program which, when run on a computer, causes the computer to carry out a method comprising performing an image analysis process based on an image of a physical document, the image analysis process comprising: extracting from the image sub-images of sections of the physical document; and for each sub-image, extracting text in the sub-image using optical character recognition, OCR, classifying, based on the sub-image and the text in the sub-image and using a (trained) transformer-based machine learning, ML, model, the sub-image as corresponding to a label among a set of labels (the labels corresponding to possible sections in the document); generating, based on the sub-image and based on the text in the sub-image and using a (trained) neural network, a textual summary of the text in the sub-image; and outputting the labels of the sub-images (as section names) and, in response to selection of at least one label by a user, outputting the corresponding at least one textual summary.

According to an embodiment of a sixth aspect there is disclosed herein an information processing apparatus comprising a memory and a processor connected to the memory, wherein the processor is configured to perform an image analysis process based on an image of a physical document, the image analysis process comprising: extracting from the image sub-images of sections of the physical document; and for each sub-image, extracting text in the sub-image using optical character recognition, OCR, classifying, based on the sub-image and the text in the sub-image and using a (trained) transformer-based machine learning, ML, model, the sub-image as corresponding to a label among a set of labels (the labels corresponding to possible sections in the document); generating, based on the sub-image and based on the text in the sub-image and using a (trained) neural network, a textual summary of the text in the sub-image; and outputting the labels of the sub-images (as section names) and, in response to selection of at least one label by a user, outputting the corresponding at least one textual summary

According to an embodiment of a seventh aspect there is disclosed herein a system comprising the information processing apparatus according to the aforementioned sixth aspect and an image capture device, wherein the image capture device is configured to capture the image of the physical document, and wherein the image capture device comprises camera and a plurality of block stops, wherein the camera is positioned relative to the block stops so that the block stops indicate the camera's field of view.

According to an embodiment of a eighth aspect there is disclosed herein a system comprising the information processing apparatus according to the aforementioned sixth aspect and an image capture device, wherein the image capture device is configured to capture the image of the physical document.

The image capture device may comprise a camera and a plurality of block stops, wherein the camera is positioned relative to the block stops so that the block stops indicate the camera's field of view.

The image capture device may comprise: a base comprising the plurality of block stops; an arm attached to the base and configured to support the camera; and a pair of rollers mounted on the base (in a plane of the base) perpendicular to one another and configured to automatically move to respective first and second edges of the physical document when the physical document is placed on the base, wherein the camera is configured to use the rollers' positions to determine the extent of the physical document.

Each roller may comprise a (optical) proximity sensor configured to sense the location of the edge concerned of the physical document and a motor configured to move the roller.

The image capture device may comprise: a display configured to display the labels and the at least one textual summary; and user input means configured to receive user input selecting the at least one label.

The image capture device may comprise: a speaker configured to output the labels and the at least one textual summary; and a microphone configured to receive a user voice selecting the at least one label.

The system may comprise a mobile device configured to receive the image of the physical document from the image capture device and transmit the image to the information processing apparatus, wherein the mobile device comprises a display configured to display the labels and the at least one textual summary and user input means configured to receive user input selecting the at least one label.

The system may comprise a mobile device configured to receive the image of the physical document from the image capture device and transmit the image to the information processing apparatus, wherein the mobile device comprises a speaker configured to output the labels and the at least one textual summary and a microphone configured to receive a user voice selecting the at least one label.

Features relating to any aspect/embodiment may be applied to any other aspect/embodiment.

Reference will now be made, by way of example, to the accompanying drawings, in which:

Figure 1 is a diagram illustrating a system;
Figure 2 is a diagram illustrating a workflow;
Figure 3 is a diagram illustrating an architecture;
Figure 4 is a diagram illustrating an image-text pair;
Figure 5 is a diagram illustrating an image-text pair;
Figure 6 is a diagram illustrating an image-text pair;

Figure 7 is a diagram illustrating matrix formulations;
Figure 8 is a diagram illustrating a transformer encoder;
Figure 9 is a diagram illustrating a workflow;
Figure 10 is a diagram illustrating a device;
Figure 11 is a flowchart illustrating a method;
Figure 12 is a flowchart illustrating a method;
Figure 13 is a flowchart illustrating a method;
Figure 14 is a flowchart illustrating a method;
Figure 15 is a diagram illustrating an image;
Figure 16 is a diagram illustrating sub-images;
Figure 17 is a diagram illustrating a screen;
Figure 18 is a diagram illustrating a screen;
Figure 19 is a diagram illustrating an image-text pair;
Figure 20 is a diagram illustrating an image-text pair;
Figure 21 is a diagram illustrating an image-text pair;
Figure 22 is a diagram illustrating an image;
Figure 23 is a diagram illustrating sub-images;
Figure 24 is a diagram illustrating a screen;
Figure 25 is a diagram illustrating a screen; and
Figure 26 is a diagram illustrating an apparatus.

The following terms may be used herein and may be defined as follows:
Personalized Medicine: is a type of medical care in which treatment is customized for an individual patient.

Ageing Population: is an increasing median age in a population because of declining fertility rates and rising life expectancy.

Internet of Things (IoT): describes physical objects (or groups of such objects) with sensors, processing ability, software and other technologies that connect and exchange data with other devices and systems over the Internet or other communications networks. The field has evolved due to the convergence of multiple technologies, including ubiquitous computing, commodity sensors, increasingly powerful embedded systems, as well as machine learning.

Text Mining: the process of deriving high-quality information from text. The process or practice of examining large collections of written resources in order to generate new information. The goal of text mining is to discover relevant information in text by transforming the text into data that can be used for further analysis.

Machine Learning (ML): the subfield of computer science that gives computers the ability to learn without being explicitly programmed. It explores the study and construction of algorithms that can learn from and make predictions on data.

Deep Learning (DL): is a part of a broader family of machine learning methods based on learning data representations, as opposed to task-specific algorithms.

Multimodal Machine Learning: is a type of deep learning using a combination of various modalities of data, often arising in real-world applications.

Optical Character Recognition (OCR): is the electronic or mechanical conversion of images of typed, handwritten or printed text into machine-encoded text, whether from a scanned document, a photo of a document, a scene photo (for example the text on signs and billboards in a landscape photo) or from subtitle text superimposed on an image (for example: from a television broadcast).

Large-Language Model (LLM): is a large-scale language model notable for its ability to achieve general-purpose language understanding and generation. LLMs acquire these abilities by using massive amounts of data to learn billions of parameters during training and consuming large computational resources during their training and operation.

Figure 1 is a diagram illustrating a system 100. The system 100 comprises two stages, Multi-modal ML architecture and Application.

Multi-modal ML architecture

This stage comprises a multi-model ML model builder 10 (or builder 10) for training an ML model 90. This stage is only executed once within the whole workflow. It is in charge of building the ML model 90 based on a multi-modal architecture design that combines information from images and text to train the model 90. The ML model 90 will process content to categorize and summarize the relevant information in order to present such information to users in the most appropriate way.

Inputs to builder 10: Annotated datasets of leaflet samples already digitized, including corresponding Image-Text pairs of sections of each leaflet in the dataset and text paragraphs summarizing each of the sections. Although the term leaflet is used herein, this is taken to mean any physical document or item including text information. For example, physical documents may include leaflets, instructions, contracts, packaging for food or medicine/pharmaceuticals, prescription notes, bank documents, insurance documents, product instructions, route transportation steps etc. The input datasets may depend on the eventual planned use of the ML model 90, for example the ML model 90 may be trained specifically for the domain it will be used in, or the model 90 may be trained using data from multiple domains.

Builder 10: Module in charge of the main workflow to train the ML model 90. Described in more detail later.

Output of builder 10: The resultant multi-modal ML model 90 which is capable of label classification (categorization) of leaflet (document) sections and capable of providing an automatically generated summary of each section.

Application

This stage comprises a leaflet information processor 50. This stage corresponds to use of the trained ML model 90, i.e. after the stage described above. This stage includes scanning of new not digitized leaflets (e.g. in paper format), and processing and analysis of the content of such leaflets using the multi-modal ML model 90 trained in the previous stage to do section classification and provide summaries of sections of those new leaflets scanned. Also, this stage may include presentation of the relevant information to users, e.g. with the interactive features for making such information accessible to everyone, possibly through the use of other devices and/or a application (app) for a user mobile device (e.g. mobile phone).

Inputs to leaflet information processor 50: The leaflet paper itself. Although the term leaflet is used, any physical document/item with text may be input (e.g. leaflets, instructions, contracts, packaging for food or medicine/pharmaceuticals, prescription notes, bank documents, insurance documents, product instructions, route transportation steps etc.).

Leaflet Information Processor 50: This is the main component of this part and uses the trained ML model 90 for leaflet section categorization and section summary generation, and also presentation of the information. An image of the physical document to be processed may be captured using an image capture device described below. The leaflet information processor may include use of a mobile app or other device(s), optionally together with speech recognition techniques for making the information more accessible. Such features are described below.

Output: The resultant output is the categorized and accessible presentation of information (e.g. via use of a mobile app) by structured sections and/or ad-hoc pages depending on the section selected to obtain further knowledge.

Figure 2 is a diagram illustrating a workflow of the builder 10, referred to in Figure 2 as "multi-model ML architecture - trainer". The workflow of the builder comprises the stages multi-modal leaflet section classifier 20 and section summary generative model 30, which may be referred to as classifier 20 and summary generator 30. The ML model 90 which is output from the builder 10 may be considered as comprising a classifier and a summary generator (as will be described in more detail below) and the stages 20 and 30 of the builder 10 may correspond to those parts of the ML model 90 during and before training. Any modules or stages described herein may be implemented by at least one processor as described herein.

Inputs to the builder 10 include annotated datasets of leaflet samples already digitized, including corresponding Image-Text pairs of sections of each leaflet in the dataset and text paragraphs summarizing the sections of each leaflet. As already mentioned, the term leaflet is used here but any physical document may be used.

The Image-Text pairs are annotated with classification labels corresponding to the sections, i.e. the target class the ML model 90 should categorize the section as once it has been trained. This set of labels is for example predefined e.g. by experts, and depends on the use case(s)/application(s) of the trained ML model 90. The text paragraph is a short summary of each section of each leaflet.

The ML model 90 which is trained by the builder 10 comprises two complementary neural network architectures, one for the label classification of the leaflet sections (Multi-modal Leaflet Section Classifier), other for the automated generation of the text summary of each section (Section Summary Generative Model).

These neural networks are based on known literature frameworks, such as Transformers, Encoder-Decoder, and Generative Adversarial Networks (GANs). As described herein, such frameworks may be adapted in a complementary way to the multi-modal architecture that is specific for the technology proposed.

The output of the builder 10 is the trained model 90 which is capable of classifying sections of physical documents and generating textual summaries of sections of leaflets, as indicated in Figure 2 and described in more detail below.

Figure 3 is a diagram illustrating architecture of the ML model 90 according to an implementation. The ML model 90 comprises a classifier stage (top) and a summary generation stage (bottom). The classifier stage is labelled "multi-model leaflet section classifier" and the summary generation stage is labelled "section summary generative model" in Figure 3. These stages may be considered the same as the stages of the builder illustrated in Figure 2.

The ML model 90 according to this implementation comprises an image encoder 21, a first text encoder 22, first and second multi-layer perceptrons (MLPs) 23, 24, a concatenation layer 25, a transformer context encoder 26, a softmax layer 27, and a text summary generator 33. Because Figure 3 is illustrated such that the training of the model 90 may be understood, the summary generation stage is illustrated as comprising a second text encoder 31 and a discriminator 34 which are used in training the ML model 90.

The ML model 90 may be considered as comprising a first ML model comprising the elements in the classifier stage in Figure 3 and a second ML model comprising the text summary generator 33. The second ML model may be considered to additionally comprise the image encoder 21, first text encoder 22, first and second multi-layer perceptrons (MLPs) 23, 24, concatenation layer 25, and transformer context encoder 26 - that is, these elements may be considered shared by the first and second ML models. The first ML model may be referred to herein as a transformer-based ML model and the second ML model as a neural network. However, both of the first and second ML models may be considered neural networks. The Common Latent Space of the two multimodality inputs is used for the section label classification and for the section summary generative model.

First ML model

An objective of this neural network is to classify the type or category of a section of a physical document based on inputs comprising image layout and plain text - i.e., a multi-modal approach. Multi-modal data is defined above, and an example of multi-modal data is data that combines text (typically represented as feature vector) with imaging data consisting of pixel intensities and annotation tags. As these modalities have fundamentally different statistical properties, combining them is non-trivial, which is why specialized modelling strategies and algorithms are required. The model is then trained to able to understand and work with multiple forms of data.

The first ML model assigns a label to each section of a physical document from a set of labels corresponding to section types. For instance, in a healthcare domain with a use case being to handle the classification of sections of medication packages leaflets, as target classes (i.e. the types or categories of sections the leaflets could have) the set of labels could be: Intake way, Drug name, Composition, Dosages, Recommendations, Side effects, Contact information, among others. Such a list of labels will be the target classes of the first ML model, i.e. the output classification that the first ML model will be able to predict.

The inputs to the first ML model comprise sub-images divided from images of physical documents and the corresponding digitized text contained therein. For example, Figures 4-6 illustrate example input pairs of images 1, 2, 3 and text, in this case from pharmaceutical leaflets/packaging. For brevity, the entire "plain text" input is not illustrated in Figures 4-6.

The image and text inputs are encoded by the image encoder 21 and the first text encoder 22, respectively, to generate embeddings - that is, to transform the information into features formatted to a vectorized representation following known approaches, such as Image Encoding and Text Encoding, in order to make the data understandable for the next stages of the first ML model.

Next (in parallel) the text embeddings and image embeddings go through MLPs 23 and 24. Each MLP comprise two Fully-Connected (FC) layers in a feedforward learning process, in this implementation, but this is not essential.

The following step is to perform a concatenation operation of the MLPs' outputs, using the concatenation layer 25. Such outputs (of the MLPs) are vectorized values (in matrix format) resultant of the mathematical operations inside each MLP. A simple concatenation is performed in this implementation based on appending the values of one matrix to the other matrix in a linear way, outputting a common joint matrix from the two sides. Mathematical formulae for the MLP outputs and the resultant concatenation layer output are illustrated in Figure 7.

Next, the resultant concatenated matrix is inputted to the Transformer Context Encoder (TCE) 26. The TCE 26 may for example comprise the architecture illustrated in Figure 8, adopted from Akbari, H., et al (2021), VATT: Transformers for multimodal self-supervised learning from raw video, audio and text, Advances in Neural Information Processing Systems, 34, 24206-24221.

Looking at Figure 8, this TCE architecture comprises a first layer normalization stage 262, a multi-head attention stage 264, a second layer normalization stage 266, and an MLP 268. The TCE architecture may comprise L such layers, where L is an integer equal to or greater than 1.

Returning to Figure 3, the output of the TCE 26 is a correlated matrix of weights of the features coming from the images and the text. A SoftMax layer 27 is applied which is specially designed for converting a vector of real numbers into a probability distribution of possible outcomes. Thus the output of the softmax layer 27 is a list of possible classifications with corresponding probabilities.

The output of the softmax layer (and of the first ML model in general) may comprise a list of possible classifications with corresponding probabilities, for a given input of an image and corresponding text contained therein. For example, a probability for each label may be output. From this, the label with the highest probability may be selected as the output. Alternatively, the output may comprise the most likely label (with this highest probability) as the classification, and for example not the probabilities associated with other labels.

The set of labels for classification may be denoted as:

$L = \{l_1, l_2, l_3, \ldots, l_n\}$, where n = number of section types (labels),

and for example, continuing the example above in the field of pharmaceutical information:

$$L = \{ \text{'IntakeWay'}, \text{'Composition'}, \text{'SideEffects'}, \ldots, l_n \}$$

The architecture of the first ML model according to an implementation has been described above. When training the first ML model, training data is used comprising pairs of training images and corresponding training text instances (text in the training images). The training images are associated with corresponding training labels in the training data. When training the first ML model the output of the first ML model comprising a predicted label for a given training image (and text) is compared with the training label associated with the training image in the training data and based on the comparison the weights of the first ML model (e.g. in the TCE 26 and optionally in the image encoder 21 and the first text encoder 22) are adjusted. In an implementation the comparison comprises computing a loss function, e.g. a cross entropy loss function. That is, Categorical Cross Entropy may be included as loss function to minimize the error between predicted class and real class of the training samples. The terms label and class may be used interchangeably herein.

The output of the training is a trained first ML model capable of predicting a label for an image of a section of a physical document and the digitized text therein, from among a set of labels corresponding to section names/types.

Second ML Model

An objective of the second ML model is the automated generation of a text summary of a leaflet section based on the image-text input pair (the image of the section and the text therein), in the form of image layout and plain text. As described above, the second ML model comprises the text summary generator (TSG) 33.

The training of the TSG 33 in this implementation is based on generative adversarial networks (GANs). A GAN has two parts: generator and discriminator. The generator learns to generate plausible data. The generated instances become negative training examples for the discriminator. The discriminator learns to distinguish the generator's fake data from real data. The discriminator penalizes the generator for producing implausible results. When training begins, the generator produces obviously fake data, and the discriminator learns to tell that it is fake (artificially generated). As the training progresses, the generator gets closer to producing output that can fool the discriminator. The discriminator gets worse at telling the difference between real and fake and it starts to classify fake data as real, and its accuracy decreases.

In this case, the TSG 33 generates artificial text summaries based on the correlated matric of weights output from the TCE 26. The discriminator 34 receives as input text embeddings generated by a second text encoder 31 which generates the text embeddings based on a training text summary (which is associated with the training image-text pairs based upon which the TSG 33 generates its artificial text summary). The discriminator learns to discriminate between artificial text summaries and real (training) text summaries in a first stage of second ML model training (or a "preliminary stage"), during which weights of the TSG are not adjusted. Once the discriminator is trained, in a secondary second ML model training phase backpropagation based on the output of the discriminator is used to train the TSG - weights of the TSG are adjusted so that the output of the TSG 33 "fools" the discriminator 34, while the weights of the discriminator are fixed. This is indicated in Figure 3 by the wording "maximize error through backpropagation" as the aim of training the TSG is to maximize the error in the discriminator's 34 output (i.e. the target is for the discriminator to discriminate incorrectly).

In other words, in a training pipeline for the second ML model, two flows of the pipeline may be considered. One flow goes through the TSG 33 which uses as input the correlated matrix of weights coming from the Common Latent Space. This component creates relationships between the latent space and the generative output (text summaries in this case). In the TSG 33 is a neural network (e.g. a Convolutional Neural Network (CNN) or Long-Short Term Memory (LSTM) that will connect with the Discriminator 34 to do the learning process (the other flow). The TSG's 33 output is connected to the discriminator 34 input. During training the discriminator 34 will provide backpropagation outputs that are used for the TSG 33 to update its weights and improve iteratively its text summaries outputted. In this way, the TSG 33 learns to provide good (realistic) summaries through the generation of fake/negative examples for the discriminator 34 which will learn to distinguish artificially generated summaries from the real ones, penalizing in the backpropagation to the TSG 33 for creating wrong summaries.

The BiLSTM in the discriminator 34 is specialized to deal with sequence-data. The training input data for the discriminator 34 is the real samples of text summaries of each section after the encoding to text embeddings (positive cases for the learning), and fake samples generated by the TSG 33 (negative cases for the learning). The Discriminator 34 starts the training before the TSG 33, which remains static and without training during the first training iterations (the preliminary training process/stage), i.e. its weights are not updated while it generates negative examples for the discriminator 34.

The output of training the second ML model is a second ML model capable of automatic generation of text summaries for new Image-Text pairs of digitalized leaflets. That is, based on an input comprising an image of a section of a physical document and the text therein the trained second ML model generates a textual summary. Training the first ML model may be considered a first training process and training the second ML model may be considered a second training process. The weights of the first ML model may also be adjusted in the second training process. The first training process may be carried out before the second training process or concurrently. The architectures described in the above implementation are not essential. The first ML model comprises a transformer-based ML model, of which the TCE 26 is an example.

The TSG 33 comprises a neural network such as a Convolutional Neural Network (CNN) or Long-Short Term Memory (LSTM). The discriminator 34 comprises, for example, a Bidirectional Long-Short Term Memory neural network (BiLSTM).

Figure 9 is a diagram illustrating a workflow 500 comprising use of the trained ML model 90 to process a physical document.

The workflow comprises using an image capture device 200 to obtain an image of a physical document, using a crop module ("sub-images sections crop module") 51 to divide the image in to sections, using an OCR processor 52 to extract text from the sub-images, using the ML model 90 in a classifier ("leaflet section categorizer") 20 to classify sections of the physical document and using the ML model 90 in a section summary generative model (SSGM) 30 to generate a textual summary of each section of the physical document. The workflow further comprises displaying the section labels on a display as illustrated by element 61, receiving speech input using a speech manager 56, and based on the speech input, displaying on the screen a textual summary corresponding to a section of the document selected according to the speech input, as illustrated by the element 62.

Sub-images sections Crop Module 51

The crop module 51 utilizes known techniques (e.g. https://cloudinary.com/guides/automatic-image-cropping/auto-image-crop-use-cases-features-and-best-practices) to divide/crop the image to provide sub-images of respective sections of the physical document, for example based on paragraph spacing and locations, formatting of the text, and image layout.

That is, this module 51 is in charge of taking the leaflet image digitalized and processing such digital image to extract by cropping techniques available in the literature sub-images of each section of the leaflet. The module may exploit machine learning techniques to analyze the content and layouts of the images. Known tools are used to perform an intelligent content-aware cropping of the leaflet digital image into sub-images of relevant sections by dividing based on the image layout, i.e. layout of paragraphs, spaces and formats. The output is the set of sub-images by sections.

OCR Processor 52

The OCR processor 52 uses known OCR (optical character recognition) techniques to extract the text in each sub-image, and outputs image-text pairs, each pair comprising a sub-image of a section and the text therein.

That is, this module 52 is in charge of applying to each sub image Optical Character Recognition (OCR) techniques, widely used in the literature, to obtain the correspondent plain text of each section. A known tool may be used such as Tesseract OCR (https://github.com/tesseract-ocr/tesseract) which is an engine for the transformation of the content of images to text format. The output will be the pairs of Image-Text data, i.e. layout image of section with pictures included + related plain text, for each section, which may be referred to as image-text pairs.

Leaflet Section Categorizer 20

This module 20 (also referred to as classifier 20) is in charge of the classification of all Image-Text pairs which are output by the OCR processor by section type among the list of section types for what the first ML model has been trained.

Each Image-Text pair is input to the classifier 20 which will analyze the Image-Text pair based on the weights of the trained first ML model and will output probabilities of the Image-Text pair belonging to each section type among the list of section types (target classes) contemplated by the model during the learning task. For the following example output for probabilities associated with each label for an Image-Text pair:

$$output=\{ [label]_1 = 0.23,\ [label]_2 = 0.0045,\ [label]_3 = 0.92,\ [label]_n = 0.112\}$$

,n = number of section types (labels),

the label with the highest probability is selected as the label of the text-image pair. In this case, the label [label]_3 with a probability of 0.92 is selected as the section type classification of the Image-Text pair.

After processing all Image-Text pairs, the output of the classifier 20 comprises the set of Image-Text pairs with the corresponding label of the section type classified for each one. This output is stored in an internal repository of the system, for example to be queried by a mobile app in order to prepare the visualization of the information.

Section Summary Generative Model 30

The SSGM 30 is in charge of generating textual summaries for the Image-Text pairs using the second machine learning model. The inputs comprise the set of Image-Text pairs from the OCR Processor 52. Generated textual summaries are stored in the internal repository and associated with the respective Image-Text pairs. Therefore, in the internal repository, for each Image-Text pair, there is stored data of the label of the section type (from the classifier 20) and the generated textual summary generated by the SSGM 30.

The sections selected as labels for the sub-images (image-text pairs) of a physical document are displayed on a screen, for example a mobile phone screen through the use of an application. The initial presentation of the app is a page including the list of the names of the sections identified in the document, as illustrated in the screen 61 in Figure 9. The user interacts with this presentation page selecting a section, e.g. by touching or by speech. That is, the user selects the desired section title by touching such title with their finger or by voice using a microphone of the mobile device and speaking the title of the section. Then, the system consults the internal repository, extracting the matching textual summary of the section selected from this datastore. Once the system has obtained the related summary, this is formatted for display on a detailed page in the mobile app (indicated by the screen 62 in Figure 9), to present the information in textual format and to provide for narration by the system. That is, the information is provided in textual format and narrated by speech communication to cover all populations including people with different visual disabilities, ageing population or people with illiteracy issues.

Speech Manager 56

This module 56 is in charge of managing interaction between the user and the mobile app via speech. The speech manager 56 effects narration of the list of sections identified in the document concerned. The user may ask the system to say again such list by speaking the instruction ’Repeat list’.

To go to the more detailed information page of a specific section, the user says the instruction ’Go to <section_name>’ (e.g. in the above example, the user could say ’Go to Recommendations’. Then, the system (e.g. the speech manager 56) will interpret the section’s name mentioned by the user and it will extract the textual summary associated with the section to load the more detailed information page of the corresponding section. The speech effects the narration of the information contained in the page (i.e. the textual summary) and, similar as before, the user may ask for the information again with the instruction ’Repeat information’. To come back to the homepage of the application, the user may say the instruction ’Return homepage’.

Third-party tools of speech recognition and text2Speech may be used by the speech manager 56, and the speech manager 56 will utilize a microphone and speaker of the mobile device.

The classifier 20 and the SSGM 30 utilize first and second ML models, respectively, trained according to the Figure 3 description, as illustrated by the "ML model 90" in Figure 9, which comprises the first and second ML models. As already described, the training of the first and second ML models (the ML model 90) may be considered to correspond to the stage "Multi-modal architecture" and the operations of the builder 10 in Figure 1, and furthermore the workflow 500 may be considered to correspond to the stage "application" and the operations of the leaflet information processor 50 in Figure 1. In a particular implementation the leaflet information processor comprises the crop module 51, the OCR processor 52, the classifier 20, the SSGM 30, and the speech manager 56.

The workflow 500 has been described as utilizing a mobile device with an application. However, the information may be displayed on any display and a mobile device and/or app is not essential. For example, the features of the display and/or narration of the information may be effected by the image capture device. The workflow 500 has been described as including display of information and narration by the speech manager 56, however this is not essential and the information may be displayed on a display without narration or may be narrated without display.

The input of the workflow 500 is the physical document, e.g. leaflet paper, (not digitalized) that the user wants to scan and obtain the relevant information. The image of the document may be obtained using an Image Capture Device, e.g. the image capture device 200 illustrated in Figure 10, which is specifically designed and adapted to be easy-usable by people with different disabilities (e.g. visual impairment, age population).

Image Capture Device 200

Figure 10 illustrates an implementation of an image capture device that may be used in the workflow 500. This hardware device is designed with specific mechanical features that facilitates use for everybody including people with disabilities. The image capture device 200 comprises a camera 201, block stops 202a, 202b, arm 203, rollers 204a, 204b, button 205, and base 206. The camera 201 is attached to the base 206 via arm 203 and is configured to capture an image of the space delineated by the black rollers. That is, the camera adjusts its field of view to include the space delineated by the rollers 204.

Features of the device 200 which facilitate use by people with disabilities include:

- Physical block stops 202: The physical block stops 202 act as markers to indicate the position where to put the physical document. These block stops 202 facilitate easy interaction with the device 200, e.g. by people with visual disabilities. A user may identify where to put a document easily by touching the block stops 202. The document is to be positioned so that an edge touches the bottom of the block stop 202b and the right-hand-side of the block stop 202a (defining "top" as the direction along the base where the arm 203 is positioned).

- Black rollers 204: Definition of physical black rollers 204 in the device 200 for automated adjustment of the capture space depending on document dimensions. Such adjustment is performed by the use of known optical proximity sensors from third-party tools that are able to detect where an object (document in this case) starts and finishes, providing for automated movement of the black rollers 204 to that position where are located the limits (bottom and right-hand-side edges) of the document. In this way, the device 200 is able to handle documents of different sizes, e.g. from A4 pages to documents of minor dimensions, with automatic resizing without the need for human intervention. Thanks to the avoidance of human intervention, the use of this device 200 by visually impaired people (who may otherwise find it more difficult to check if the picture is being taken successfully) is facilitated. These black rollers 204 have a physical skeleton to enable automatic movement. Riller 204a is able to move up and down and roller 204b is able to move left and right. The rollers 204 move perpendicularly to one another. The movement of the rollers is described in more detail below.

- Capture button 205: Inclusion of a physical (and relatively big) button 205 to take the picture once the leaflet is well-positioned and calibrated over the capture space. The physical nature and optionally the relatively large size of this button 205 is intentionally designed to facilitate use by the visually impaired, e.g. by touch. That is, the physical nature of the button 205 makes it more easy for the visually impaired to feel the button 205.

Figure 10 also illustrates (on the right-hand-side) a more specific implementation of a roller 204 which may correspond to the rollers 204a and 204b.

Roller 204 comprises a pair of large cylinders 41, 42 mounted around (on) a small cylinders 43. At least one of (or both of) the large cylinders 41, 42 comprises therein a gear assembly to move the large cylinder 41, 42 with respect to the small cylinder 43 so as to make the extensive movements of the roller 204. For example, to extend the roller 204, the smaller cylinder 43 may move from inside to outside from the larger cylinder 42. The attachment of the large cylinders 41, 42 to the smaller cylinder 43 is such as to enable relative rotational movement of the large cylinders 41, 42 (i.e. so that the roller 204 is able to move ("roll") in a transverse direction.

Roller 204 comprises a rail motor 49 which is complementary to and is configured to sit within a rail groove 2061 in the base 206. The rail motor 2061 effects movement of the roller in the transverse direction (i.e. perpendicular to the length of the cylinders 41-43 of the roller). The base 206 would comprise a pair of rail grooves corresponding to the pair of rollers 204a/b. The roller 204 comprises optical proximity sensors 45 and 46, one affixed to each larger cylinder 41, 42. The output of the sensor 45 is used for controlling a first movement effected by the rail motor 49 and the output of the second sensor 46 is used for controlling a second movement effected by the gear assembly(ies) to extend or shorten the roller 204. The first and second movements are for fitting the width/height of the leaflet.

In implementations in which a display or device separate from the image capture device 200 is used to output the information (section names and textual summary), the display or device may be connected to the image capture device 200 via Wi-Fi or Bluetooth. For example, the user's mobile device may be connected to the device 200 via WiFi or Bluetooth. The device 200 may transmit the image captured to the other device, e.g. mobile device. The processing may be carried out on the other device (e.g. mobile device) or in the cloud or on a server to which the device (e.g. mobile device) connects. Alternatively, the image may be transmitted from the device 200 to the server for processing (workflow 500) and the other device (e.g. mobile device) may connect to the server to collect the results of the processing (the output of workflow 50 comprising the section names and textual summary(ies)). The image capture device 200 may comprise a display and/or a speaker and microphone and may output the results of workflow 500. The processing of workflow 500 may be carried out by the device 200 (which may comprise a memory and at least one processor) or via the cloud/a server.

Figure 11 is a flowchart illustrating a method. The method comprises steps S10-S60 and may be considered an image analysis process based on an image of a physical document.

Step S10 comprising extracting sub-images. That is, step S10 comprises extracting from the image sub-images of sections of the physical document.

Step S20 comprises extracting text from each sub-image. That is, step S20 comprises, for each sub-image,

extracting text in the sub-image using optical character recognition, OCR.

Step S30 comprises classifying each sub-image as corresponding to a label. That is, step S30 comprises, for each sub-image, classifying, based on the sub-image and the text in the sub-image and using a (trained) transformer-based ML model, the sub-image as corresponding to a label among a set of labels (the labels corresponding to possible sections in the document).

Step S40 comprises generating a textual summary for each sub-image. That is, step S40 comprises, for each sub-image, generating, based on the sub-image and based on the text in the sub-image and using a (trained) neural network, a textual summary of the text in the sub-image.

Step S50 comprises outputting the labels of the sub-images (i.e. the section names). Step S60 comprises outputting at least one textual summary based on an input. That is, step S60 comprises, in response to selection of at least one label by a user, outputting the corresponding at least one textual summary.

In a specific implementation, the transformer-based ML model comprises an image encoder to extract an image embedding of the sub-image, a first text encoder to extract a text embedding of the text in the sub-image, and a transformer to generate, based on the image embedding and the text embedding, a prediction of the label for the sub-image. The transformer may output a correlated matrix of features and the transformer-based ML model may comprise a softmax layer to convert the correlated matrix of features into a probability distribution across the set of labels. The transformer may comprise a transformer encoder, which comprises, for example, at least one multi-head attention stage and at least one multi-layer perceptron, MLP, as well as a first layer normalization stage before the at least one multi-head attention stage and a second layer normalization stage before the MLP. The transformer encoder may comprises a plurality of such layers.

Step S40 may involve using the correlated matrix of features output by the transformer as input to the neural network. In a specific implementation the neural network comprises at least one of a convolutional neural network, a long-short-term-memory network, and a large language model.

Outputting the labels and the at least one textual summary in steps S50 and S60 may involve causing a display to display the labels and the at least one textual summary. Alternatively or additionally, these steps may involve using a text-to-speech model and causing a speaker to speak aloud the labels and the at least one textual summary comprises. Step S60 may comprise receiving user input comprising a voice to select the at least one label, for example using a microphone to receive sound of the voice and converting the sound to text (using a speech-to-text model).

The Figure 11 method may be considered to correspond to the workflow 500 (although the workflow 500 includes the additional operations of acquiring an image of the document). That is, step S10 may be considered to correspond to the operations of the crop module 51, step S30 to the operations of the OCR processor 52, step S30 to the operations of the classifier 20, step S40 to the operations of the SSGM 30, and/or step S60 to the operations of the SSGM 30 and/or speech manager 56. Description of the workflow 500 may apply to the Figure 11 method and vice versa. The transformer-based ML model may be considered to correspond to the first ML model described above, and the neural network to the second ML model described above. The Figure 11 method may be performed by a device (image capture device 200 or mobile device, e.g. via an app) or a server.

Figure 12 is a flowchart illustrating a method which may be considered a first training process based on training data and comprises steps S31-S33. Step S31 comprises classifying a training image as corresponding to a label. That is, step S31 comprises classifying, based on a training image of a physical document and based on text in the training image and using a transformer-based ML model, the training image as corresponding to a label among a set of labels.

Step S32 comprises comparing the classification with a training label. That is, step S32 comprises comparing the label (to which the training image was classified as corresponding) with a training label associated with the training image in the training data.

Step S33 comprises adjusting at least one weight of the transformer-based ML model. That is, step S33 comprises adjusting, based on the comparison, at least one weight of the transformer-based ML model. Step S32 may comprise computing a categorical cross entropy loss as part of the comparison, or another form of loss.

The Figure 12 method may comprise iterating/repeating the first training process (steps S31-S33) until the comparison (step S32) indicates loss convergence or until a threshold number of iterations have been performed. The training data comprises a plurality of training images of a plurality of physical documents and for example each iteration of the first training process comprises using a different training image. The training images may be sub-images in the sense that each training image is an image of a single section of a physical document that may have been extracted/divided from a larger image of a plurality of sections of a physical document, i.e. of the whole physical document.

The transformer-based ML model here may be considered to correspond to the first ML model (and/or the transformer-based ML model described with respect to the Figure 11 method) and the Figure 12 method may be considered to correspond to the training of the first ML model described with respect to Figure 3. Description of the training of the first ML model described with respect to Figure 3 may apply to the Figure 12 method and vice versa.

Figure 13 is a flowchart illustrating a method which may be considered a second training process based on training data and comprises steps S41-S43. Step S41 comprises generating a textual summary based on a training image and associated text. That is, step S41 comprises generating, based on the training image of a physical document and based on text in the training image and using a neural network, a textual summary of the text in the training image.

Step S42 comprises comparing the generated textual summary with a training textual summary. That is, step S42 comprises comparing the textual summary with a training textual summary associated with the training image in the training data.

Step S43 comprises adjusting at least one weight of the neural network. That is, step S43 comprises adjusting, based on the comparison, at least one weight of the neural network.

The Figure 13 method may comprise iterating/repeating the second training process (steps S41-S43) until the comparison (step S42) indicates loss convergence or until a threshold number of iterations have been performed. The training data comprises a plurality of training images of a plurality of physical documents and for example each iteration of the first training process comprises using a different training image. The training images may be sub-images in the sense that each training image is an image of a single section of a physical document that may have been extracted/divided from a larger image of a plurality of sections of a physical document, i.e. of the whole physical document.

In a specific implementation, step S42 comprises using a discriminator to attempt to discriminate between the generated textual summary and the training textual summary and may comprise generating a textual summary text embedding of the training textual summary for input to the discriminator. The discriminator may comprise a long-short-term-memory (LSTM) neural network or a bidirectional long-short-term-memory (Bi-LSTM) neural network.

The discriminator is a discriminator that has been trained before the second training process to discriminate between training and generated textual summaries, for example according a discriminator training process comprising using the discriminator to estimate whether a textual summary among a plurality of (corresponding) generated and training textual summaries is a generated textual summary or a training textual summary and updating at least one weight of the discriminator when the estimation is incorrect. The second training process of Figure 13 may comprise performing the discriminator training process as a preliminary step.

The neural network here may be considered to correspond to the second ML model (and/or the neural network described with respect to the Figure 11 method) and the Figure 13 method may be considered to correspond to the training of the second ML model described with respect to Figure 3. Description of the training of the second ML model described with respect to Figure 3 may apply to the Figure 13 method and vice versa.

Figure 14 is a flowchart illustrating a method comprising steps S101, S102, and S110-S160. Step S101 comprises performing the first training process described with respect to Figure 12. Step S102 comprises performing the second training process described with respect to Figure 13. Steps S110-S160 are the same as steps S10-S60, respectively, of Figure 11, and duplicate description is omitted here. The transformer-based ML model and the neural network are trained in steps S101 and S102, respectively, to obtain trained models and these are used in the subsequent steps of the Figure 14 method. Description of the Figures 11-13 methods applies here. The Figure 14 method may be considered to correspond to the operations described with respect to Figure 1.

The first and second training processes may be performed as a single training process. The transformer-based ML model may be adjusted based on the comparison of the textual summaries as well as based on the comparison of labels, e.g. because the second neural network takes as input the correlated matrix of weights/features from the transformer encoder of the transformer-based ML model.

The methodologies disclosed herein may be applied in a number of different scenarios/fields, for example in the medical field. The physical document may comprise an instruction note or leaflet for medication/pharmaceutical or a medication/ pharmaceutical container - this may be useful because instructions for medicine may sometimes be difficult to read, especially for the visually impaired and/or elderly. The physical document may comprise a form or contract.

The labels of the set of labels correspond to (predefined) possible sections of the physical document. The set of labels may comprise a plurality of the following examples (e.g. if the physical document comprises an instruction note or leaflet for medication or a medication container): drug name; intake; dosage; side effects; questions; recommendations; contact; instructions; description; composition; and others.

Example in Healthcare domain: Making accessible the content of leaflets within drug medication packages

An example of applying to the healthcare domain the methodologies disclosed herein will now be described.

1 - training

The ML model is first trained. For this use case, required as inputs are numerous Image-Text pairs of sections included in leaflets related to drug medication packages which are already digitalized as well as the text summary of each of these sections. Figures 4-6 illustrate three potential examples of inputs.

The following list of classes (labels/sections) are defined for the first ML model for this use case: Drug name, Description/Use, Composition, Intake way, Dosage, Recommendations, Other instructions, Side-effects, Contacts.

The ML model (first and second ML models) are trained as described above to obtained trained ML models.

2 - application

An image of the medication leaflet to be processed is acquired, for example using the image capture device 200. Figure 15 illustrates the acquired image 4, which is of a medication package. Sub-images of the sections of the package are obtained using the crop module 51. Figure 16 illustrates the obtained sub-images 4a-4i. The text in each sub-image is extracted using the OCR processor 52, to obtain image-text pairs. The sub-images are classified as corresponding to one of the labels among the set of labels. That is, the classifier 20 is used to categorize each section of the leaflet. After applying the first ML model, the classification for each sub-image 4a-4i is as follows.

sub-image 4a:

*output1=maximize {drugName=0.023, DescriptionUse=0.93, Composition=0.12, IntakeWay=0.88, Dosage=0.46, Recommendations=0.28, OtherInstructions=0.17, SideEffects=0.034, Contacts=0.0112}.*
*Classification = Description Use*

sub-image 4b:

*output2=maximize {drugName=0.004, DescriptionUse=0.15, Composition=0.03, IntakeWay=0.68, Dosage=0.21, Recommendations=0.91, OtherInstructions=0.74, SideEffects=0.66, Contacts=0.0005}*
*Classification = Recommendations*

sub-image 4c:

*output3=maximize {drugName=0.056, DescriptionUse=0.67, Composition=0.13, IntakeWay=0.89, Dosage=0.934, Recommendations=0.54, OtherInstructions=0.22, SideEffects=0.02, Contacts=0.0033}*
*Classification = Dosage*

sub-image 4d:

*output4=maximize {drugName=0.0007, DescriptionUse=0.24, Composition=0.003, IntakeWay=0.48, Dosage=0.11, Recommendations=0.97, OtherInstructions=0.69, SideEffects=0.53, Contacts=0.009}*
*Classification = Recommendations*

sub-image 4e:

*output5=maximize fdrugName=0.002, DescriptionUse=0.67, Composition=0.132, IntakeWay=0.82, Dosage=0.95, Recommendations=0.64, OtherInstructions=0.28, SideEffects=0.37, Contacts=0.0007}*
*Classification = Dosage*

sub-image 4f

*output6=maximize {drugName=0.0006, DescriptionUse=0.19, Composition=0.05, IntakeWay=0.77, Dosage=0.14, Recommendations=0.922, OtherInstructions=0.81, SideEffects=0.49, Contacts=0.0044}*
*Classification = Recommendations*

sub-image 4g

*output7=maximize {drugName=0.36, DescriptionUse=0.0078, Composition=0.02, IntakeWay=0.09, Dosage=0.004, Recommendations=0.22, OtherInstructions=0.41, SideEffects=0.18, Contacts=0.987}*
*Classification = Contacts*

sub-image 4h

*output8=maximize {drugName=0.0066, DescriptionUse=0.145, Composition=0.96, IntakeWay=0.189, Dosage=0.86, Recommendations=0.124, OtherInstructions=0.089, SideEffects=0.0003, Contacts=0.000156}*
*Classification = Composition*

sub-image 4i

*output9=maximize fdrugName=0.0063 ,DescriptionUse=0.33, Composition=0.06, IntakeWay=0.19, Dosage=0.008, Recommendations=0.88, OtherInstructions=0.74, SideEffects=0.55, Contacts=0.008}*
*Classification = Recommendations*

Each Image-Text pair is stored together with the label in the system's datastore. This information is used to prepare and present the information in the mobile app. Figure 17 illustrates a screen 63 displaying in the mobile app the section names which have been detected in the sections of the packaging.

A textual summary is generated for each image-text pair using the second ML model. For example, the generated textual summaries for the sub-images 4a-4c are as follows:

Sub-image 4a: Medication for use with headache, migraine, neuralgia, rheumatic aches and palms, colds and influenza. Swallow with water.

Sub-image 4b: Unrecommended to take other drug with paracetamol or too much of this drug at once. Talk to doctor in these cases.

Sub-image 4c: Take one or two caplets the adults, elderly and children above 15 years. Between 12 and 15, take one-one and half, 10 to 12 take only one, 6 to 10 take half one.

The summaries are stored in the datastore associated with the corresponding Image-Text pair and the corresponding label. In this case, for the recommendation section, since there are multiple sub-images, the corresponding textual summaries would be combined and displayed together (e.g. one after the other, or combined such that one textual summary is stored per section) if the user selected this section for display.

Once the text-image pairs have been classified and textual summaries generated and stored, the textual summaries are ready for output when selected by the user. An example interaction using the Speech Manager 56 is described below.

1. Narration by the system through the mobile phone speakers of the available sections of the current leaflet. The system will say, for example, 'You may consult information about the following sections for this drug: composition, descriptionuse, dosage, recommendations and contacts. Please say Go to and a section name for further details'.

2. The user speaks to the microphone of the mobile device and says 'Go to descriptionuse'. Next, the mobile app would jump to the Detailed information page in the interface and display the screen 64 illustrated in Figure 18. In parallel, such information is narrated by the system. The information (textual summary) which is output is retrieved from the internal datastore by querying using the label DescriptionUse.

3. If the user says 'Repeat information', the textual summary will be narrated again more slowly.

4. Next, the user says 'Return to homepage' to come back to the screen 63 with the list of sections in order to consult information about other sections.

Example in Finance domain: Making accessible content of bank loan contracts in paper

An example of applying to the Finance domain the methodologies disclosed herein will now be described.

The first workflow that is executed only once, the first time, implies the training of our Machine Learning model through the Multi-modal ML architecture proposed in this invention.

1 - training

The ML model is first trained. For this use case, required as inputs are numerous Image-Text pairs of sections included in bank loan contracts already digitalized as well as the text summary of each of these sections. Figures 19-21 illustrate three examples of training image-text pairs.

The following list of classes (labels/sections) are defined for the first ML model for this use case: BorrowerInfo, LenderInfo, GeneralTerms, PaymentTerms, LoanDetails, ContractDate, RepaymentTerms, PrepaymentTerms, Other-Conditions.

The ML model (first and second ML models) are trained as described above to obtained trained ML models.

2 - application

An image of the document to be processed is acquired, for example using the image capture device 200. Figure 22 illustrates the acquired image 8, which is of a bank loan contract. Sub-images of the sections of the package are obtained using the crop module 51. Figure 23 illustrates the obtained sub-images 8a-8e. The text in each sub-image is extracted using the OCR processor 52, to obtain image-text pairs. The sub-images are classified as corresponding to one of the labels among the set of labels. That is, the classifier 20 is used to categorize each section of the document. After applying the first ML model, the classification for each sub-image 8a-8e is as follows.

Sub-image 8a

output1=maximize {borrowerInfo=0.97, lenderInfo=0.97, generalTerms=0.83, paymentTerms=0.12, loanDetails=0.48, contractDate=0.0034, repaymentTerms=0.05, prepaymentTerms=0.01, otherConditions=0.31}
Classification = borrowerInfo, lenderInfo

Sub-image 4b

output2=maximize {borrowerInfo=0.1165, lenderInfo=0.22, generalTerms=0.72, paymentTerms=0.89, loanDetails=0.92, contractDate=0.0016, repaymentTerms=0.38, prepaymentTerms=0.31, otherConditions=0.59}
Classification = loan Details

Sub-image 8c

output3=maximize {borrowerInfo=0.11, lenderInfo=0.05, generalTerms=0.70, paymentTerms=0.90, loanDetails=0.79, contractDate=0.0055, repaymentTerms=0.43, prepaymentTerms=0.48, otherConditions=0.61}
Classification = loan Details
Classification = paymentTerms

Sub-image 8d

output4=maximize {borrowerInfo=0.066, lenderInfo=0.032, generalTerms=0.73, paymentTerms=0.943, loanDetails=0.85, contractDate=0.002, repaymentTerms=0.443, prepaymentTerms=0.55, otherConditions=0.68}
Classification = paymentTerms

Sub-image 8e

output5=maximize {borrowerInfo=0.003, lenderInfo=0.0076, generalTerms=0.412, paymentTerms=0.846, loanDetails=0.66, contractDate=0.0009, repaymentTerms=0.887, prepaymentTerms=0.963, otherConditions=0.47}
Classification = prepaymentTerms

Each Image-Text pair is stored together with the label in the system's datastore. This information is used to prepare and present the information in the mobile app. Figure 24 illustrates a screen 65 displaying in the mobile app the section names which have been detected in the sections of the document.

A textual summary is generated for each image-text pair (more specifically, in this case, for each section) using the second ML model. For example, the generated textual summaries (incomplete, for brevity) for the sub-images 8b-8d are as follows:

sub-image 8b: Borrower agrees to owe $10,000 to the lender with interest rate of 10% by year ...

sub-images 8c/d: Borrower agrees payment once per month beginning on 10th January of 2021 delivered to lender at the address specified ...

A single textual summary is generated and stored for both sub-images 8c and 8d in this case.

The summaries are stored in the datastore associated with the corresponding Image-Text pair and the corresponding label. In this case, for the paymentTerms section, since there are multiple sub-images, the corresponding textual summaries are combined such that one textual summary is stored per section, i.e. the same textual summary is stored for both sub-images (which comprises information generated based on both sub-images).

Once the text-image pairs have been classified and textual summaries generated and stored, the textual summaries are ready for output when selected by the user. An example interaction using the Speech Manager 56 is described below.

1. Narration by the system through the mobile phone speakers of the available sections of the current leaflet. The system will say, for example, 'You may consult information about the following sections for this contract, borrower info, lender info, loan details, payment terms and prepayment terms. Please say Go to and a section name for further details'.

2. The user speaks to the microphone of the mobile device and says 'Go to prepayment terms'. Next, the mobile app would jump to the Detailed information page in the interface and display the screen 68 illustrated in Figure 25. In parallel, such information is narrated by the system. The information (textual summary) which is output is retrieved from the internal datastore by querying using the label prepaymentTerms.

3. If the user says 'Repeat information', the textual summary will be narrated again more slowly.

4. Next, the user says 'Return to homepage' to come back to the screen 65 with the list of sections in order to consult information about other sections.

Methodologies disclosed herein may be applied in any domain where it is useful to access content of physical documents such as leaflets, flyers, pamphlets, journals or any document in paper format with plain text, layout sections and/or images.

There is disclosed herein a method comprising steps S10, S20, S30, S50, and S60 of Figure 11, except that in step S60, rather than a textual summary being output, the text of the corresponding sub-image/section selected by the user input is output. That is, in this method there is no generation of textual summaries and instead of outputting a textual summary the actual text extracted from the sub-image concerned is output when the corresponding label/section is selected by the user. In this case, the first ML model is used (having been trained) to classify the sub-images, but the second ML model is not used.

Figure 26 is a block diagram of an information processing apparatus 900 or a computing device 900, such as a data storage server, which embodies the present invention, and which may be used to implement some or all of the operations of a method embodying the present invention, and perform some or all of the tasks of apparatus of an embodiment. The computing device 900 may be used to implement any of the method steps or operations described above, e.g. any of steps S10-S60, S31-S33, S41-S43, and S101-S160, and/or any of the operations described with reference to Figures 1-3, 8 and 9.

The computing device 900 comprises a processor 993 and memory 994. Optionally, the computing device 900 also includes a network interface 997 for communication with other such computing devices, for example with other computing devices of invention embodiments. Optionally, the computing device also includes one or more input mechanisms such as keyboard and mouse 996, and a display unit such as one or more monitors 995. These elements may facilitate user interaction. The components are connectable to one another via a bus 992.

The memory 994 may include a computer readable medium, which term may refer to a single medium or multiple media (e.g., a centralized or distributed database and/or associated caches and servers) configured to carry computer-executable instructions. Computer-executable instructions may include, for example, instructions and data accessible by and causing a computer (e.g., one or more processors) to perform one or more functions or operations. For example, the computer-executable instructions may include those instructions for implementing a method disclosed herein, or any of the method steps or operations described above, e.g. any of steps S10-S60, S31-S33, S41-S43, and S101-S160, and/or any of the operations described with reference to Figures 1-3, 8 and 9. Thus, the term "computer-readable storage medium" may also include any medium that is capable of storing, encoding or carrying a set of instructions for execution by the machine and that cause the machine to perform any one or more of the method steps of the present disclosure. The term "computer-readable storage medium" may accordingly be taken to include, but not be limited to, solid-state memories, optical media and magnetic media. By way of example, and not limitation, such computer-readable media may include non-transitory computer-readable storage media, including Random Access Memory (RAM), Read-Only Memory (ROM), Electrically Erasable Programmable Read-Only Memory (EEPROM), Compact Disc Read-Only Memory (CD-ROM) or other optical disk storage, magnetic disk storage or other magnetic storage devices, flash memory devices (e.g., solid state memory devices).

The processor 993 is configured to control the computing device and execute processing operations, for example executing computer program code stored in the memory 994 to implement any of the method steps or operations described herein. The memory 994 stores data being read and written by the processor 993 and may store images and/or sub-images and/or digitized images and/or text and/or image/text encodings and/or weights of the first and second ML models and/or matrices of features/weights and/or textual summaries and/or at least one set of labels and/or probabilities and/or classifications and/or any models described herein and/or input data and/or other data, described above, and/or programs for executing any of the method steps or operations described above. As referred to herein, a processor may include one or more general-purpose processing devices such as a microprocessor, central processing unit, or the like. The processor may include a complex instruction set computing (CISC) microprocessor, reduced instruction set computing (RISC) microprocessor, very long instruction word (VLIW) microprocessor, or a processor implementing other instruction sets or processors implementing a combination of instruction sets. The processor may also include one or more special-purpose processing devices such as an application specific integrated circuit (ASIC), a field programmable gate array (FPGA), a digital signal processor (DSP), network processor, or the like. In one or more embodiments, a processor is configured to execute instructions for performing the operations and operations discussed herein. The processor 993 may be considered to comprise any of the modules described above. Any operations described as being implemented by a module may be implemented as a method by a computer and e.g. by the processor 993.

The display unit 995 may display a representation of data stored by the computing device, such as a representation of images and/or sub-images and/or sections/labels detected in a document and/or textual summaries and/or GUI windows and/or interactive representations enabling a user to interact with the apparatus 900 by e.g. drag and drop or selection interaction, and/or any other output described above, and may also display a cursor and dialog boxes and screens enabling interaction between a user and the programs and data stored on the computing device. The input mechanisms 996 may enable a user to input data and instructions to the computing device, such as enabling a user to input any user input described above. The input 996 may comprise a microphone for receiving user input as described above, and the computing device 900 may comprise a speaker for outputting information as described above.

The network interface (network I/F) 997 may be connected to a network, such as the Internet, and is connectable to other such computing devices via the network. The network I/F 997 may control data input/output from/to other apparatus via the network. Other peripheral devices such as microphone, speakers, printer, power supply unit, fan, case, scanner, trackerball, speaker, etc may be included in the computing device.

Methods embodying the present invention may be carried out on a computing device/apparatus 900 such as that illustrated in Figure 26. Such a computing device need not have every component illustrated in Figure 26, and may be composed of a subset of those components. For example, the apparatus 900 may comprise the processor 993 and the memory 994 connected to the processor 993. Or the apparatus 900 may comprise the processor 993, the memory 994 connected to the processor 993, and the display 995. A method embodying the present invention may be carried out by a single computing device in communication with one or more data storage servers via a network. The computing device may be a data storage itself storing at least a portion of the data.

A method embodying the present invention may be carried out by a plurality of computing devices operating in cooperation with one another. One or more of the plurality of computing devices may be a data storage server storing at least a portion of the data.

The invention may be implemented in digital electronic circuitry, or in computer hardware, firmware, software, or in combinations of them. The invention may be implemented as a computer program or computer program product, i.e., a computer program tangibly embodied in a non-transitory information carrier, e.g., in a machine-readable storage device, or in a propagated signal, for execution by, or to control the operation of, one or more hardware modules.

A computer program may be in the form of a stand-alone program, a computer program portion or more than one computer program and may be written in any form of programming language, including compiled or interpreted languages, and it may be deployed in any form, including as a stand-alone program or as a module, component, subroutine, or other unit suitable for use in a data processing environment. A computer program may be deployed to be executed on one module or on multiple modules at one site or distributed across multiple sites and interconnected by a communication network.

Method steps of the invention may be performed by one or more programmable processors executing a computer program to perform functions of the invention by operating on input data and generating output. Apparatus of the invention may be implemented as programmed hardware or as special purpose logic circuitry, including e.g., an FPGA (field programmable gate array) or an ASIC (application-specific integrated circuit).

Processors suitable for the execution of a computer program include, by way of example, both general and special purpose microprocessors, and any one or more processors of any kind of digital computer. Generally, a processor will receive instructions and data from a read-only memory or a random access memory or both. The essential elements of a computer are a processor for executing instructions coupled to one or more memory devices for storing instructions and data.

The computing device 900 may be considered an example of an "other device" or mobile device which may perform operations as described above with reference to e.g. Figure 10. There is disclosed herein a system comprising the image capture device 200 and the computing device 900.

The device 900 may be considered an example of the image capture device 200 in an implementation in which the image capture device 200 carries out the operations of analysing the image and outputting corresponding information rather than an other device or mobile device. Put another way, the device 900 may comprise a functional unit comprising the image capture device 200, and in that case the device 900 may be configured to carry out the operations/method steps described as being performed by an "other device" or mobile device in the Figure 10 description.

Some benefits of the methodologies disclosed herein are (among others):

- Use of remote device (e.g. 200) for capturing leaflets which are not digitized, without the need of bar codes in the products nor access to external databases. Such device may be particularly useful for the visually impaired.
- IoT device (e.g. 200) with direct communication to mobile device by Bluetooth/WiFi to send the images captured in the leaflet for the automatic processing by a mobile application without further human intervention
- Integrated speech recognition systems for interaction with the system
- Image Processing, Image2text and multi-modal ML architectures for transforming the information and transmitting such information to users

Furthermore, the proposed methodologies enable users to scan any new/rare leaflet in paper format, unknown at the time by, for example LLMs, and have the information included in such leaflet analyzed, processed and provided to users in a structured manner to enhance usefulness and relevancy of the information. Thanks to the incorporation of the Speech Manager 56, for example (among other features), accessibility of information in physical documents is improved, particularly for the visually impaired and/or elderly and/or illiterate and/or people with neurological disorders.

The methodologies disclosed herein address the following problems that exist with the current state of the art:

1. No systems capable of interpreting and transmitting to users the relevant sections and content of any not-digitized paper leaflet (for example without needing bar codes and corresponding database storage).
2. No devices able to automatically handle any format of paper leaflet to capture its content as images and process such images by a system to present, categorize, summarize and transmit the information to all users, even people with complete blindness.
3. No technologies able to connect such a device with mobile systems to prepare and transmit automatically the information in a mobile application and allow interaction with the users in multiple ways, depending on the grade of disability of the user.
4. No technologies able to integrate Image Processing (OCR systems) with multi-modal machine learning architectures and text mining procedures to process any leaflet and output its content in a comprehensive way without need of reading such leaflets.

In the healthcare sector, methodologies disclosed herein provide support in Personalized Medicine (e.g., providing accessibility and understanding of the content of drug leaflets or prescription notes).

A goal of methodologies disclosed herein is a system, mobile application and ad-hoc device to provide automatic preparation and exposition of relevant content included in leaflets, for facilitating the accessibility to people with disabilities.

Some features of methodologies disclosed herein include:

- Technology which follows the paradigm of the Internet of Things (IoT) and multi-modal machine learning architectures to make accessible to all users the information in leaflets, for example medication packages.
- Remote ad-hoc device connected by Bluetooth to mobile application for capturing images from leaflets, being capable of automatic adjustment depending on leaflet size.
- Module in the system for automatic recognition/categorization/transmission of leaflet contents in multiple ways, allowing interaction of users to obtain relevant information by leaflet sections.
- Proprietary own design of a capture image device to scan leaflets in paper format (e.g. notes in medication packages, medical prescriptions, legal documents, product instructions, etc.) with the particularity in comparison to other similar devices in the market of being created specifically to handle disabilities related to visual impairment or ageing population. To this end, concrete mechanical features (that are explained in following sections) were added to facilitate the manipulation of the device by everybody, including people with such kind of disabilities.
- Image capture device connected remotely (by Bluetooth or Wi-Fi) to a proprietary app mobile in user's mobile and capable of sending directly the digitalized images of the leaflets to this app.
- Multi-modal architectures.
- Integration of Image Processing and Speech Recognition techniques together with the use of multi-modal machine learning models to make possible the whole workflow of methodologies disclosed herein.
- Automatic recognition, processing, categorization and presentation of leaflet contents in multiple ways, facilitating the access of this information to anyone, including people with disabilities (visually impaired and/or elderly and/or illiterate). Allowing the interaction of users to obtain relevant data by leaflet sections in different ways (by reading, by buttons, by touching the mobile, by voice, by listening).
- Mobile application to output in an accessible manner processed information from leaflets through structured sections, integrating multiple possible ways of interaction to make it accessible to people with different grades of disabilities (vision impairment, complete blindness, ageing population, illiteracy issues, neurological disorders, etc.).

The above-described embodiments of the present invention may advantageously be used independently of any other of the embodiments or in any feasible combination with one or more others of the embodiments.

## Claims

1. A computer-implemented method comprising performing an image analysis process based on an image of a physical document, the image analysis process comprising:

    extracting from the image sub-images of sections of the physical document; and
    for each sub-image

        extracting text in the sub-image using optical character recognition, OCR,
        classifying, based on the sub-image and the text in the sub-image and using a transformer-based machine learning, ML, model, the sub-image as corresponding to a label among a set of labels, and
        generating, based on the sub-image and based on the text in the sub-image and using a neural network, a textual summary of the text in the sub-image; and

    outputting the labels of the sub-images and, in response to selection of at least one label by a user, outputting the corresponding at least one textual summary.

2. The computer-implemented method as claimed in claim 1, wherein the transformer-based ML model comprises:

    an image encoder to extract an image embedding of the sub-image;
    a text encoder to extract a text embedding of the text in the sub-image; and
    a transformer to generate, based on the image embedding and the text embedding, a prediction of the label for the sub-image.

3. The computer-implemented method as claimed in claim 2, wherein the transformer outputs a correlated matrix of features and wherein the transformer-based ML model comprises a softmax layer to convert the correlated matrix of features into a probability distribution across the set of labels.

4. The computer-implemented method as claimed in claim 2 or claim 3, wherein the transformer comprises at least one multi-head attention stage and at least one multi-layer perceptron, MLP.

5. The computer-implemented method as claimed in any of the preceding claims, wherein generating the textual summary comprises using the correlated matrix of features output by the transformer as input to the neural network.

6. The computer-implemented method as claimed in any of the preceding claims, wherein outputting the labels comprises causing a speaker to speak aloud the labels and wherein outputting the at least one textual summary comprises causing a speaker to speak aloud the at least one textual summary, and wherein the computer-implemented method further comprises receiving user input comprising a voice to select the at least one label.

7. The computer-implemented method as claimed in any of the preceding claims, wherein the physical document comprises an instruction note or leaflet for medication or a medication container.

8. The computer-implemented method as claimed in any of the preceding claims, wherein the set of labels comprises a plurality of:

    drug name;
    intake;
    dosage;
    side effects;
    questions;
    recommendations;

contact;
instructions;
description; and
composition.

**9.** The computer-implemented method as claimed in any of the preceding claims, wherein the transformer-based ML model has been trained according to a first training process based on training data, the first training process comprising:

classifying, based on a training image of a physical document and based on text in the training image and using the transformer-based ML model, the training image as corresponding to a label among a set of labels; and
comparing the label to which the training image was classified as corresponding with a training label associated with the training image in the training data and adjusting, based on the comparison, at least one weight of the transformer-based ML model,

and wherein the neural network has been trained according to a second training process based on the training data, the second training process comprising:

generating, based on the training image of the physical item and based on the text in the training image and using a neural network, a textual summary of the text in the training image; and
comparing the textual summary with a training textual summary associated with the training image in the training data and adjusting, based on the comparison, at least one weight of the neural network.

**10.** The computer-implemented method as claimed in any of claims 1-8, further comprising, before performing the image analysis process, performing first and second training processes to train the transformer-based ML model and the neural network, respectively, based on training data,

wherein the first training process comprises:

classifying, based on a training image of a physical document and based on text in the training image and using the transformer-based machine learning, ML, model, the training image as corresponding to a label among a set of labels; and
comparing the label to which the training image was classified as corresponding with a training label associated with the training image in the training data and adjusting, based on the comparison, at least one weight of the transformer-based ML model,

wherein the second training process comprises:

generating, based on the training image of the physical document and based on the text in the training image and using a neural network, a textual summary of the text in the training image; and
comparing the textual summary with a training textual summary associated with the training image in the training data and adjusting, based on the comparison, at least one weight of the neural network.

**11.** The computer-implemented method as claimed in claim 10, wherein comparing the generated textual summary with the training textual summary comprises using a discriminator to attempt to discriminate between the generated textual summary and the training textual summary.

**12.** A computer program which, when run on a computer, causes the computer to carry out a method comprising performing an image analysis process based on an image of a physical document, the image analysis process comprising:

extracting from the image sub-images of sections of the physical document; and
for each sub-image

extracting text in the sub-image using optical character recognition, OCR,
classifying, based on the sub-image and the text in the sub-image and using a transformer-based machine learning, ML, model, the sub-image as corresponding to a label among a set of labels, and
generating, based on the sub-image and based on the text in the sub-image and using a neural network, a textual summary of the text in the sub-image; and

outputting the labels of the sub-images and, in response to selection of at least one label by a user, outputting the corresponding at least one textual summary.

**13.** An information processing apparatus comprising a memory and a processor connected to the memory, wherein the processor is configured to perform an image analysis process based on an image of a physical document, the image analysis process comprising:

extracting from the image sub-images of sections of the physical document; and
for each sub-image

extracting text in the sub-image using optical character recognition, OCR,
classifying, based on the sub-image and the text in the sub-image and using a transformer-based machine learning, ML, model, the sub-image as corresponding to a label among a set of labels, and
generating, based on the sub-image and based on the text in the sub-image and using a neural network, a textual summary of the text in the sub-image; and

outputting the labels of the sub-images and, in response to selection of at least one label by a user, outputting the corresponding at least one textual summary

**14.** A system comprising the information processing apparatus as claimed in claim 13 and an image capture device, wherein the image capture device is configured to capture the image of the physical document, and wherein the image capture device comprises a camera and a plurality of block stops, wherein the camera is positioned relative to the block stops so that the block stops indicate the camera's field of view.

**15.** The system as claimed in claim 14, further comprising a mobile device configured to receive the image of the physical document from the image capture device and transmit the image to the information processing apparatus, wherein the mobile device comprises a speaker configured to output the labels and the at least one textual summary and a microphone configured to receive a user voice selecting the at least one label.

**Amended claims in accordance with Rule 137(2) EPC.**

**1.** A computer-implemented method comprising performing an image analysis process based on an image of a physical document, the image analysis process comprising:

extracting (S10) from the image sub-images of the image based on image layout, wherein the sub-images correspond to respective sections of the physical document; and
for each sub-image

extracting (S20) text in the sub-image using optical character recognition, OCR,
classifying (S30), based on the sub-image and the text in the sub-image and using a transformer-based machine learning, ML, model, the sub-image as corresponding to a label among a set of labels, the labels corresponding to possible section names, and
generating (S40), based on the sub-image and based on the text in the sub-image and using a neural network, a textual summary of the text in the sub-image; and

outputting (S50) the labels of the sub-images as section names of the respective sections of the physical document and, in response to selection of at least one label by a user, outputting (S60) the corresponding at least one textual summary,
wherein the transformer-based ML model comprises:

an image encoder to extract an image embedding of the sub-image;
a text encoder to extract a text embedding of the text in the sub-image; and
a transformer to generate, based on the image embedding and the text embedding, a prediction of the label for the sub-image,

wherein the transformer-based ML model has been trained according to a first training process based on training data, the first training process comprising:

classifying (S31), based on a training image of a section of a physical document and based on text in the training image and using the transformer-based ML model, the training image as corresponding to a label among the set of labels; and
comparing (S32) the label to which the training image was classified as corresponding with a training label associated with the training image in the training data and adjusting (S33), based on the comparison, at least one weight of the transformer-based ML model,

and wherein the neural network has been trained according to a second training process based on the training data, the second training process comprising:

generating (S41), based on the training image of the physical document and based on the text in the training image and using a neural network, a textual summary of the text in the training image; and
comparing (S42), using a discriminator, the textual summary with a training textual summary associated with the training image in the training data and adjusting (S43), based on the comparison, at least one weight of the neural network to maximize an error in the discriminator's output, wherein the discriminator is a long-short-term-memory, LSTM, neural network or a bidirectional LSTM neural network which has been trained to discriminate between training textual summaries and generated textual summaries.

**2.** The computer-implemented method as claimed in claim 1, wherein the transformer outputs a correlated matrix of features and wherein the transformer-based ML model comprises a softmax layer to convert the correlated matrix of features into a probability distribution across the set of labels.

**3.** The computer-implemented method as claimed in claim 1 or claim 2, wherein the transformer comprises at least one multi-head attention stage and at least one multilayer perceptron, MLP.

**4.** The computer-implemented method as claimed in any of the preceding claims, wherein generating (S40) the textual summary comprises using the correlated matrix of features output by the transformer as input to the neural network.

**5.** The computer-implemented method as claimed in any of the preceding claims, wherein outputting (S50) the labels comprises causing a speaker to speak aloud the labels and wherein outputting (S60) the at least one textual summary comprises causing a speaker to speak aloud the at least one textual summary, and wherein the computer-implemented method further comprises receiving user input comprising a voice to select the at least one label.

**6.** The computer-implemented method as claimed in any of the preceding claims, wherein the physical document comprises an instruction note or leaflet for medication or a medication container.

**7.** The computer-implemented method as claimed in any of the preceding claims, wherein the set of labels comprises a plurality of:

drug name;
intake;
dosage;
side effects;
questions;
recommendations;
contact;
instructions;
description; and
composition.

**8.** The computer-implemented method as claimed in any of the preceding claims, further comprising, before performing the image analysis process, performing the first and second training processes to train the transformer-based ML model and the neural network, respectively.

**9.** A computer program which, when run on a computer, causes the computer to carry out a method comprising performing an image analysis process based on an image of a physical document, the image analysis process comprising:

extracting (S10) from the image sub-images of the image based on image layout, wherein the sub-images correspond to respective sections of the physical document; and
for each sub-image

extracting (S20) text in the sub-image using optical character recognition, OCR,
classifying (S30), based on the sub-image and the text in the sub-image and using a transformer-based machine learning, ML, model, the sub-image as corresponding to a label among a set of labels, the labels corresponding to possible section names, and
generating (S40), based on the sub-image and based on the text in the sub-image and using a neural network, a textual summary of the text in the sub-image; and

outputting (S50) the labels of the sub-images as section names of the respective sections of the physical document and, in response to selection of at least one label by a user, outputting (S60) the corresponding at least one textual summary,
wherein the transformer-based ML model comprises:

an image encoder to extract an image embedding of the sub-image;
a text encoder to extract a text embedding of the text in the sub-image; and
a transformer to generate, based on the image embedding and the text embedding, a prediction of the label for the sub-image,

wherein the transformer-based ML model has been trained according to a first training process based on training data, the first training process comprising:

classifying (S31), based on a training image of a section of a physical document and based on text in the training image and using the transformer-based ML model, the training image as corresponding to a label among the set of labels; and
comparing (S32) the label to which the training image was classified as corresponding with a training label associated with the training image in the training data and adjusting (S33), based on the comparison, at least one weight of the transformer-based ML model,

and wherein the neural network has been trained according to a second training process based on the training data, the second training process comprising:

generating (S41), based on the training image of the physical document and based on the text in the training image and using a neural network, a textual summary of the text in the training image; and
comparing (S42), using a discriminator, the textual summary with a training textual summary associated with the training image in the training data and adjusting (S43), based on the comparison, at least one weight of the neural network to maximize an error in the discriminator's output, wherein the discriminator is a long-short-term-memory, LSTM, neural network or a bidirectional LSTM neural network which has been trained to discriminate between training textual summaries and generated textual summaries.

**10.** An information processing apparatus (900) comprising a memory (994) and a processor (993) connected to the memory (994), wherein the processor (993) is configured to perform an image analysis process based on an image of a physical document, the image analysis process comprising:

extracting from the image sub-images of the image based on image layout, wherein the sub-images correspond to respective sections of the physical document; and
for each sub-image

extracting text in the sub-image using optical character recognition, OCR,
classifying, based on the sub-image and the text in the sub-image and using a transformer-based machine learning, ML, model, the sub-image as corresponding to a label among a set of labels, the labels corresponding to possible section names, and
generating, based on the sub-image and based on the text in the sub-image and using a neural network, a textual summary of the text in the sub-image; and

outputting the labels of the sub-images as section names of the respective sections of the physical document and, in response to selection of at least one label by a user, outputting the corresponding at least one textual summary, wherein the transformer-based ML model comprises:

an image encoder to extract an image embedding of the sub-image;
a text encoder to extract a text embedding of the text in the sub-image; and
a transformer to generate, based on the image embedding and the text embedding, a prediction of the label for the sub-image,

wherein the transformer-based ML model has been trained according to a first training process based on training data, the first training process comprising:

classifying, based on a training image of a section of a physical document and based on text in the training image and using the transformer-based ML model, the training image as corresponding to a label among the set of labels; and
comparing the label to which the training image was classified as corresponding with a training label associated with the training image in the training data and adjusting, based on the comparison, at least one weight of the transformer-based ML model,

and wherein the neural network has been trained according to a second training process based on the training data, the second training process comprising:

generating, based on the training image of the physical document and based on the text in the training image and using a neural network, a textual summary of the text in the training image; and
comparing, using a discriminator, the textual summary with a training textual summary associated with the training image in the training data and adjusting, based on the comparison, at least one weight of the neural network to maximize an error in the discriminator's output, wherein the discriminator is a long-short-term-memory, LSTM, neural network or a bidirectional LSTM neural network which has been trained to discriminate between training textual summaries and generated textual summaries.

**11.** A system comprising the information processing apparatus (900) as claimed in claim 10 and an image capture device (200), wherein the image capture device (200) is configured to capture the image of the physical document, and wherein the image capture device (200) comprises a camera (201) and a plurality of block stops (202), wherein the camera (201) is positioned relative to the block stops (202) so that the block stops (202) indicate the camera's (201) field of view.

**12.** The system as claimed in claim 11, further comprising a mobile device configured to receive the image of the physical document from the image capture device (200) and transmit the image to the information processing apparatus (900), wherein the mobile device comprises a speaker configured to output the labels and the at least one textual summary and a microphone configured to receive a user voice selecting the at least one label.

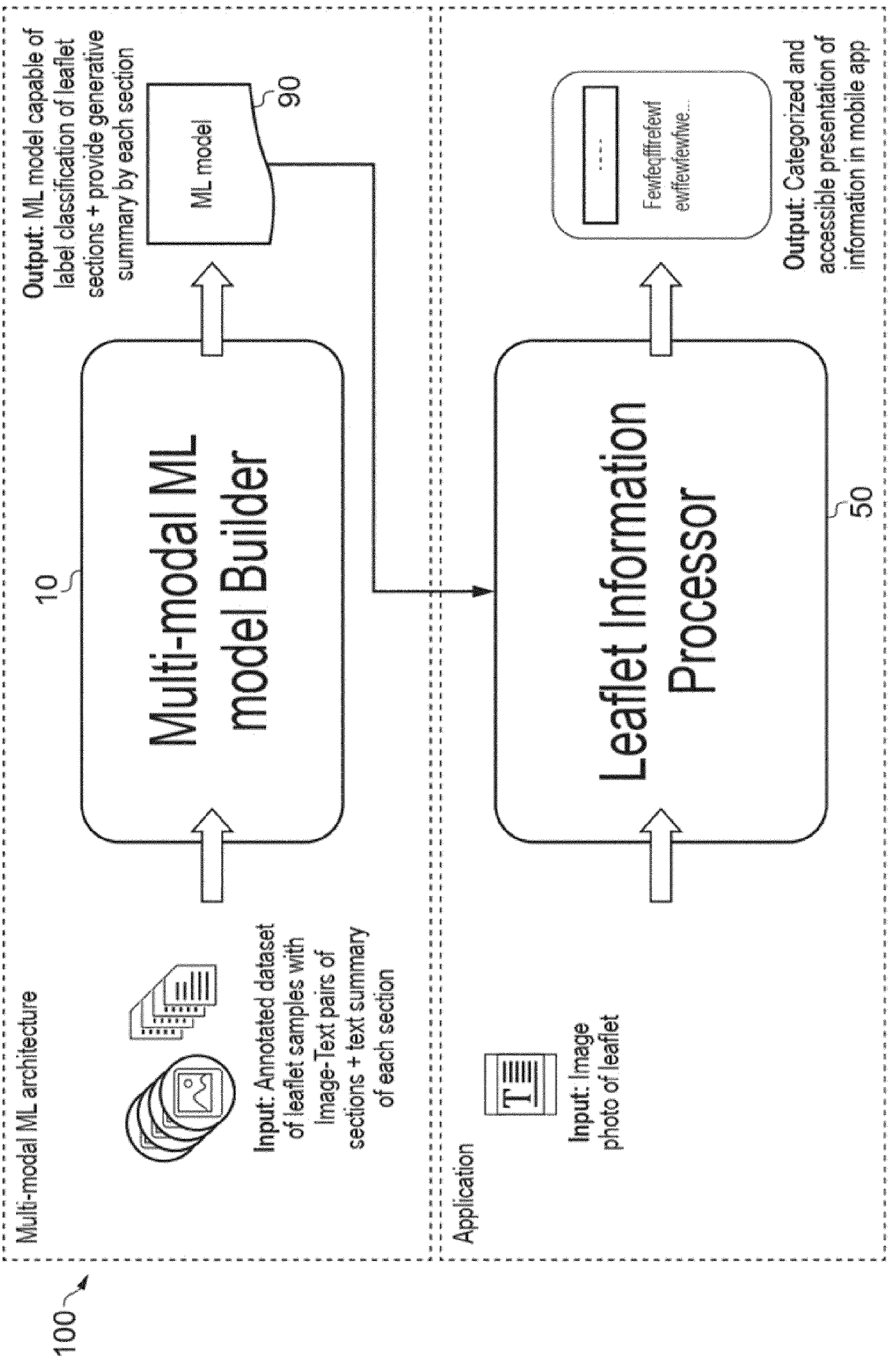
100
Multi-modal ML architecture
Input: Annotated dataset of leaflet samples with Image-Text pairs of sections + text summary of each section
10
Multi-modal ML model Builder
ML model
90
Output: ML model capable of label classification of leaflet sections + provide generative summary by each section
Application
Input: Image photo of leaflet
Leaflet Information Processor
50
Fewfeqfffrefewf ewffewfewfwe...
Output: Categorized and accessible presentation of information in mobile app

FIGURE 1

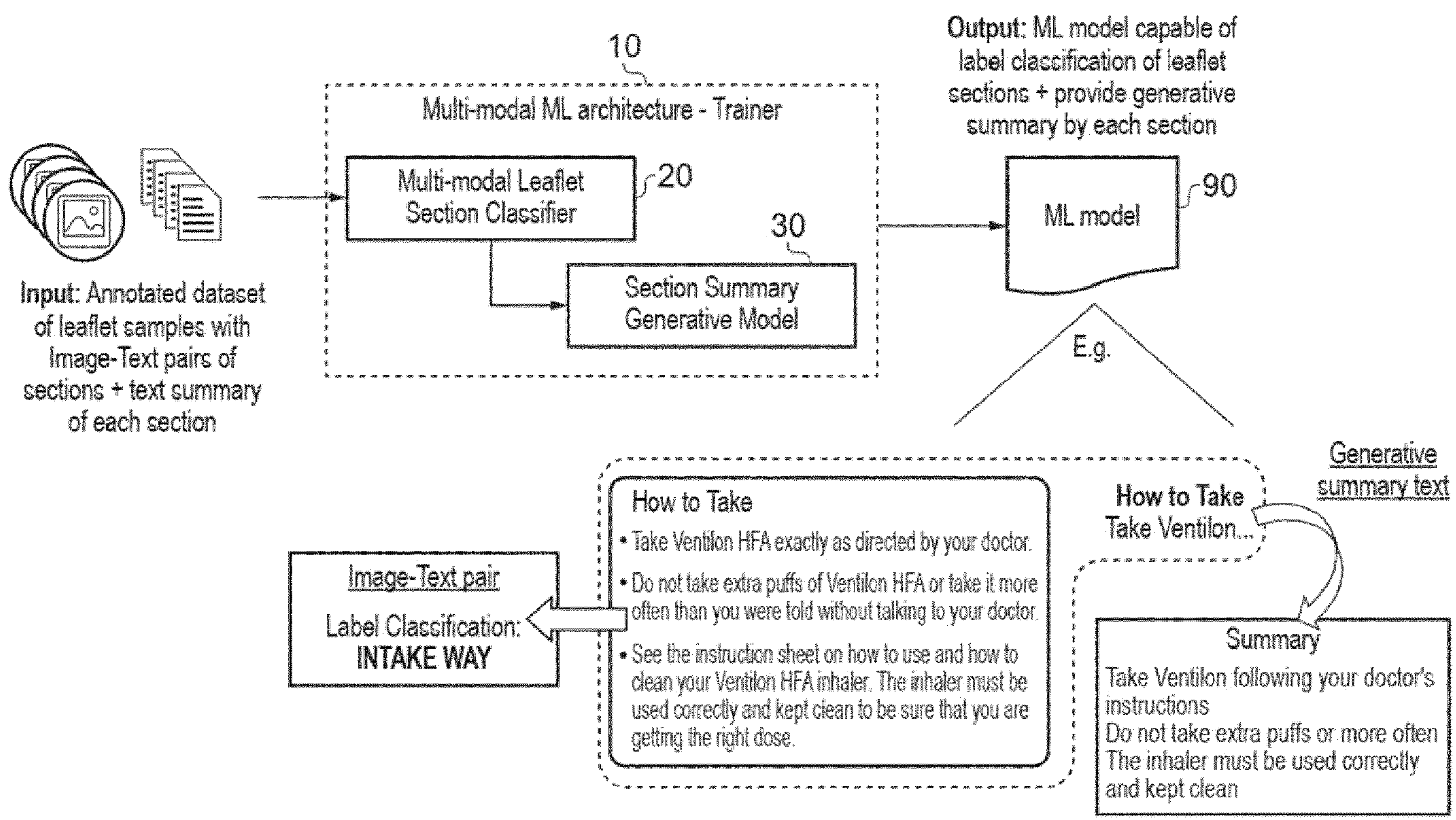
10
Multi-modal ML architecture - Trainer
Multi-modal Leaflet Section Classifier
20
Section Summary Generative Model
30
Input: Annotated dataset of leaflet samples with Image-Text pairs of sections + text summary of each section
Output: ML model capable of label classification of leaflet sections + provide generative summary by each section
ML model
90
E.g.
How to Take
• Take Ventilon HFA exactly as directed by your doctor.
• Do not take extra puffs of Ventilon HFA or take it more often than you were told without talking to your doctor.
• See the instruction sheet on how to use and how to clean your Ventilon HFA inhaler. The inhaler must be used correctly and kept clean to be sure that you are getting the right dose.
How to Take
Take Ventilon...
Generative summary text
Summary
Take Ventilon following your doctor's instructions
Do not take extra puffs or more often
The inhaler must be used correctly and kept clean
Image-Text pair
Label Classification:
INTAKE WAY

FIGURE 2

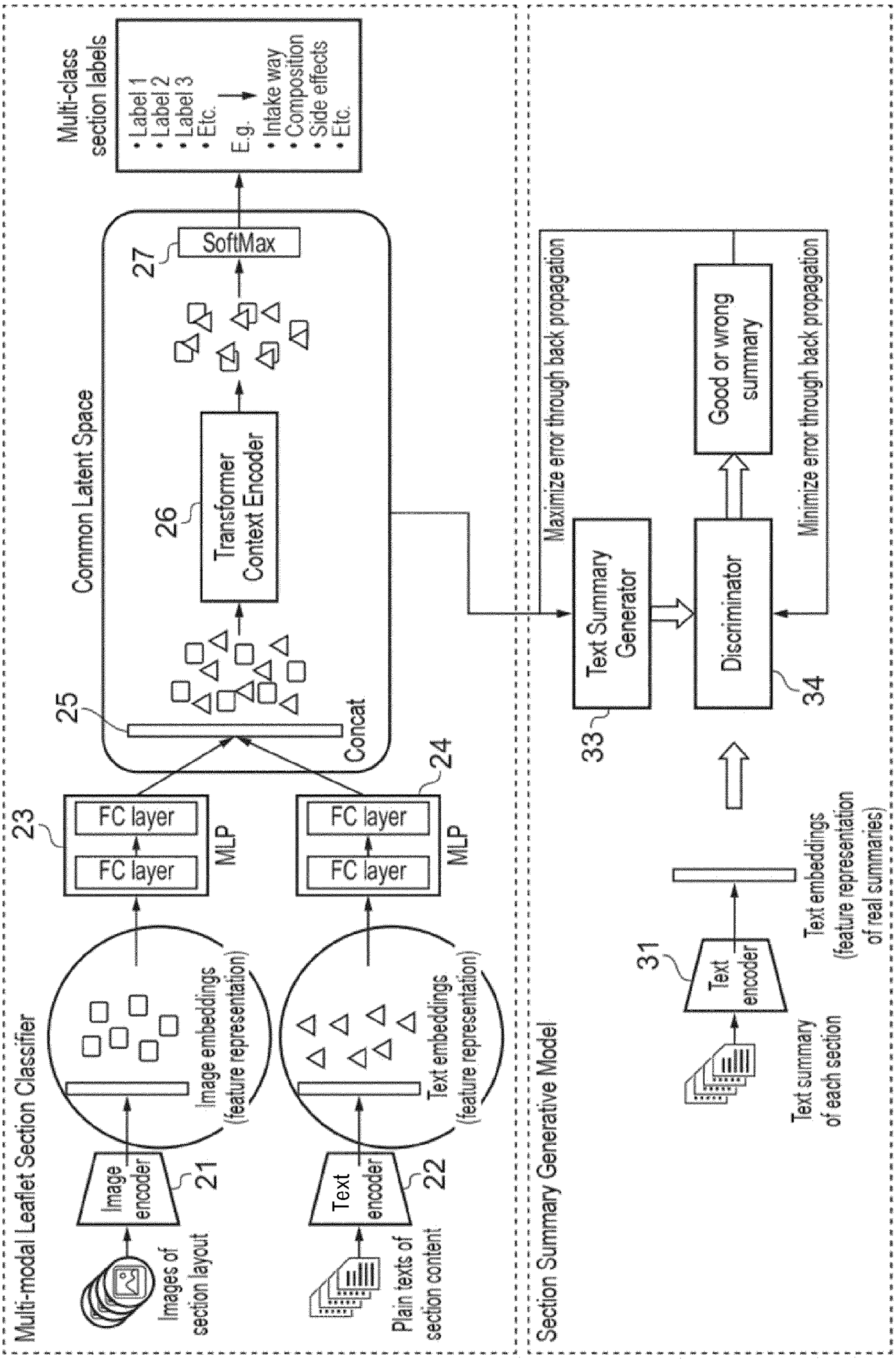
Multi-modal Leaflet Section Classifier
Images of section layout
Image encoder
21
Image embeddings (feature representation)
FC layer
FC layer
MLP
23
Plain texts of section content
Text encoder
22
Text embeddings (feature representation)
FC layer
FC layer
MLP
24
Common Latent Space
25
Concat
26
Transformer Context Encoder
27
SoftMax
Multi-class section labels
• Label 1
• Label 2
• Label 3
• Etc.
E.g.
• Intake way
• Composition
• Side effects
• Etc.
Section Summary Generative Model
Text summary of each section
31
Text encoder
Text embeddings (feature representation of real summaries)
33
Text Summary Generator
34
Discriminator
Good or wrong summary
Maximize error through back propagation
Minimize error through back propagation

FIGURE 3

Image layout

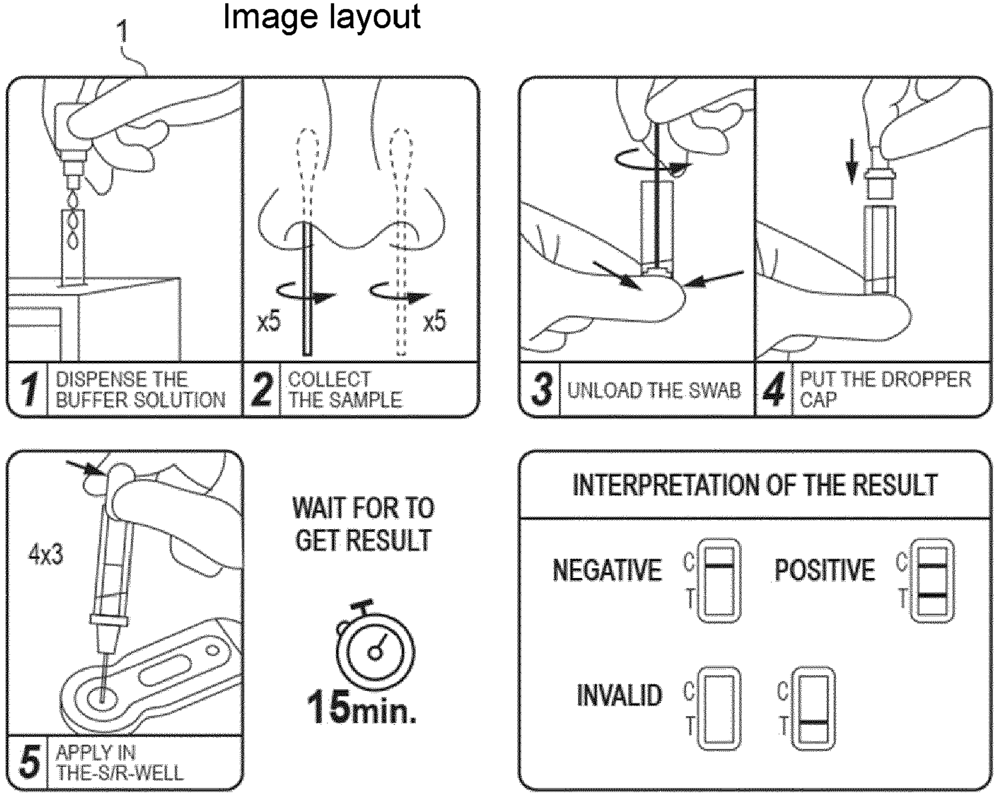


Plain text

1. Dispense the buffer solution
2. Collect the sample
3. Upload the SWAB
4. ...

**Label: Instructions**

FIGURE 4

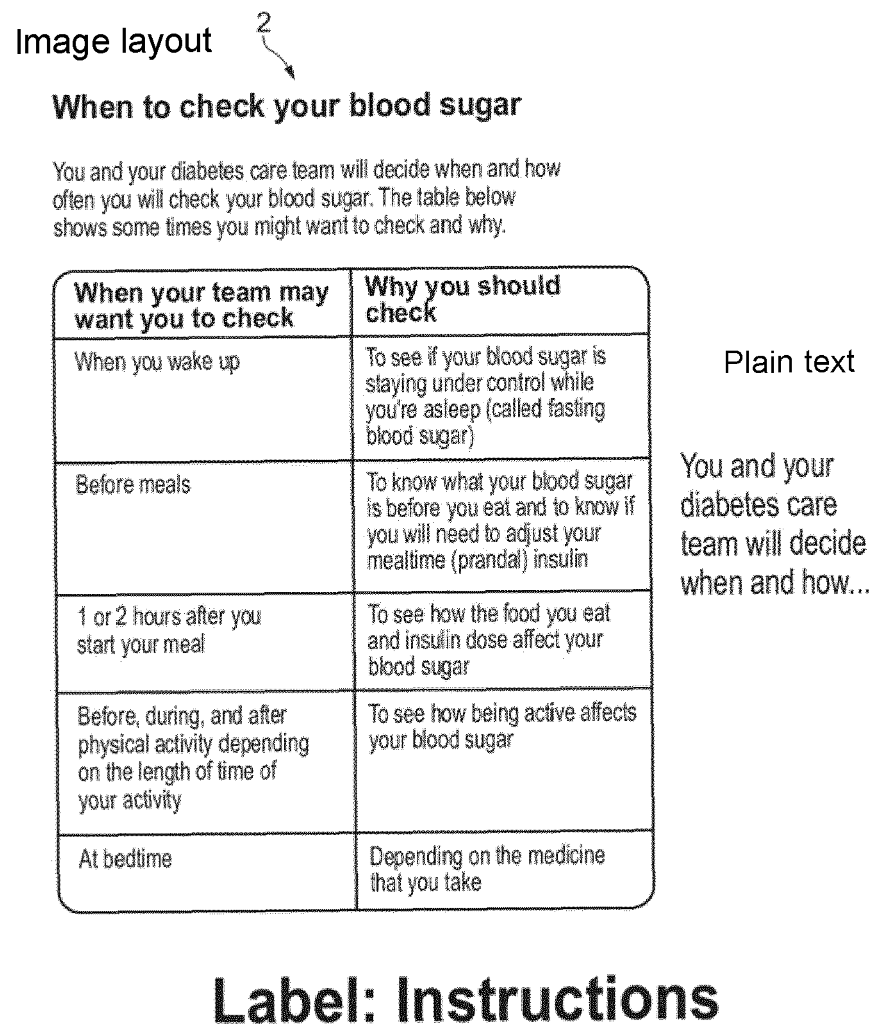


**When to check your blood sugar**

You and your diabetes care team will decide when and how often you will check your blood sugar. The table below shows some times you might want to check and why.

| When your team may want you to check | Why you should check |
|---|---|
| When you wake up | To see if your blood sugar is staying under control while you're asleep (called fasting blood sugar) |
| Before meals | To know what your blood sugar is before you eat and to know if you will need to adjust your mealtime (prandal) insulin |
| 1 or 2 hours after you start your meal | To see how the food you eat and insulin dose affect your blood sugar |
| Before, during, and after physical activity depending on the length of time of your activity | To see how being active affects your blood sugar |
| At bedtime | Depending on the medicine that you take |

FIGURE 5

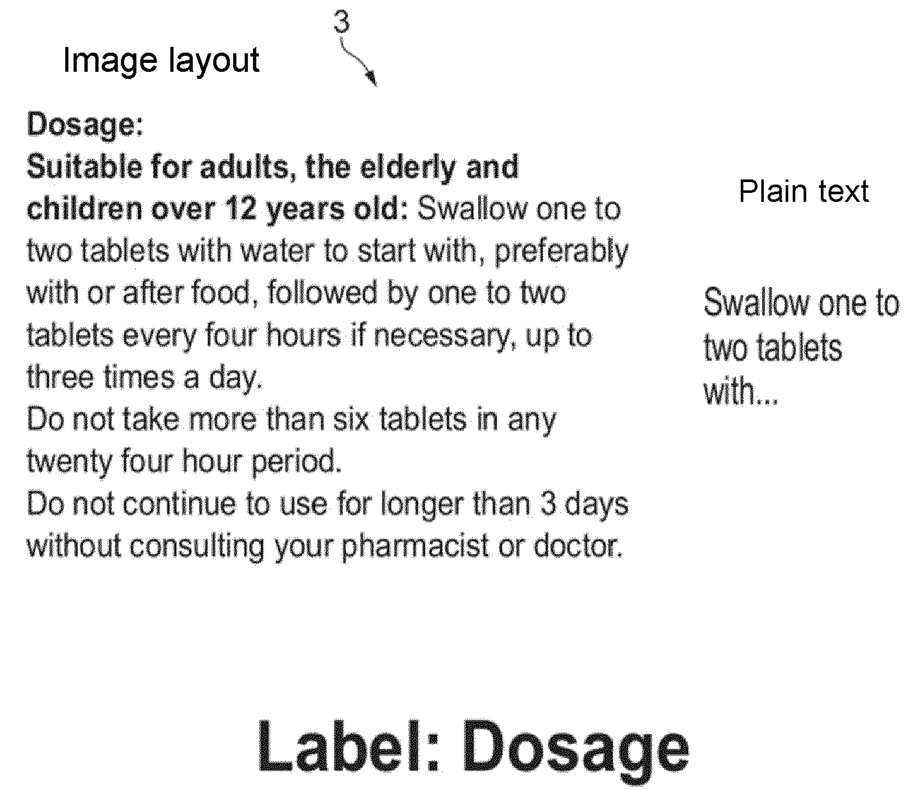
Image layout
3
Dosage:
**Suitable for adults, the elderly and children over 12 years old:** Swallow one to two tablets with water to start with, preferably with or after food, followed by one to two tablets every four hours if necessary, up to three times a day.
Do not take more than six tablets in any twenty four hour period.
Do not continue to use for longer than 3 days without consulting your pharmacist or doctor.
Plain text
Swallow one to two tablets with...
Label: Dosage

FIGURE 6

Matrix output from Image MLP:

$$I = \begin{bmatrix} i_{1,1} & \cdots & i_{1,m} \\ \vdots & \ddots & \vdots \\ i_{k,1} & \cdots & i_{k,m} \end{bmatrix}, \textit{KxM (i.e. matrix dimensions)}$$

Matrix output from Text MLP:

$$T = \begin{bmatrix} t_{1,1} & \cdots & t_{1,m} \\ \vdots & \ddots & \vdots \\ t_{n,1} & \cdots & t_{n,m} \end{bmatrix}, \textit{NxM}$$

Resultant concatenation matrix:

$$C = \begin{bmatrix} i_{1,1} & \cdots & i_{1,m} \\ \vdots & \ddots & \vdots \\ i_{k,1} & \cdots & i_{k,m} \\ t_{1,1} & \cdots & t_{1,m} \\ \vdots & \ddots & \vdots \\ t_{n,1} & \cdots & t_{n,m} \end{bmatrix}, \textit{KNxM}$$

FIGURE 7

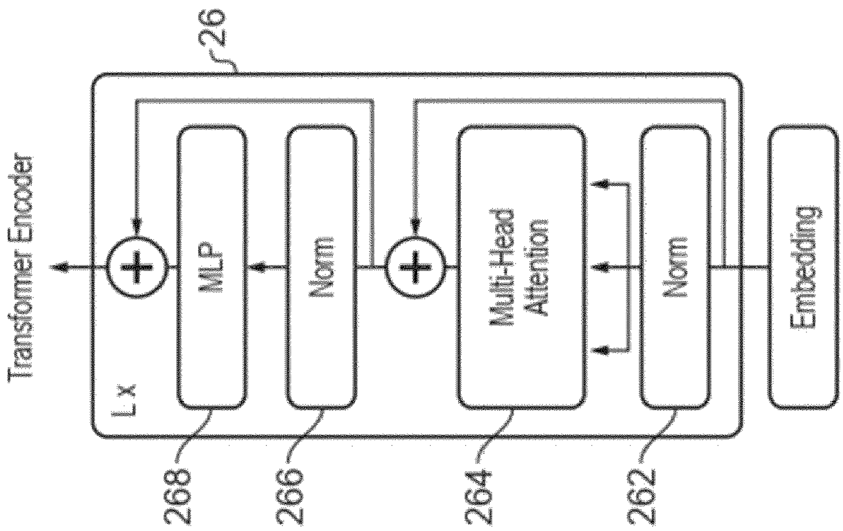
Transformer Encoder
26
L x
MLP
Norm
Multi-Head Attention
Norm
Embedding
268
266
264
262

FIGURE 8

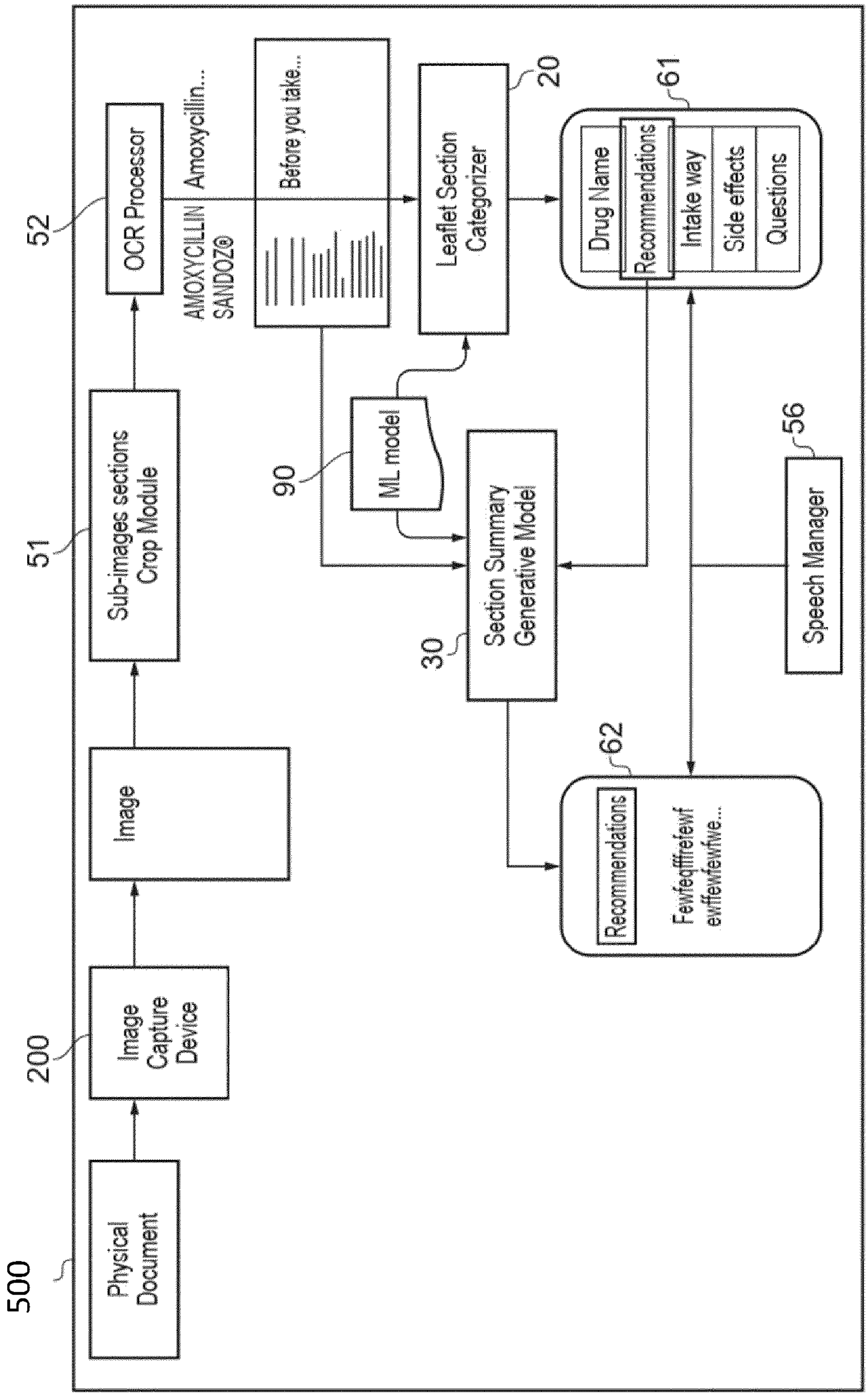
500
Physical Document
200
Image Capture Device
Image
51
Sub-images sections Crop Module
52
OCR Processor
AMOXYCILLIN SANDOZ®
Amoxycillin...
Before you take...
20
Leaflet Section Categorizer
90
ML model
30
Section Summary Generative Model
61
Drug Name
Recommendations
Intake way
Side effects
Questions
56
Speech Manager
62
Recommendations
Fewfeqfffrefewf ewffewfewfwe...

FIGURE 9

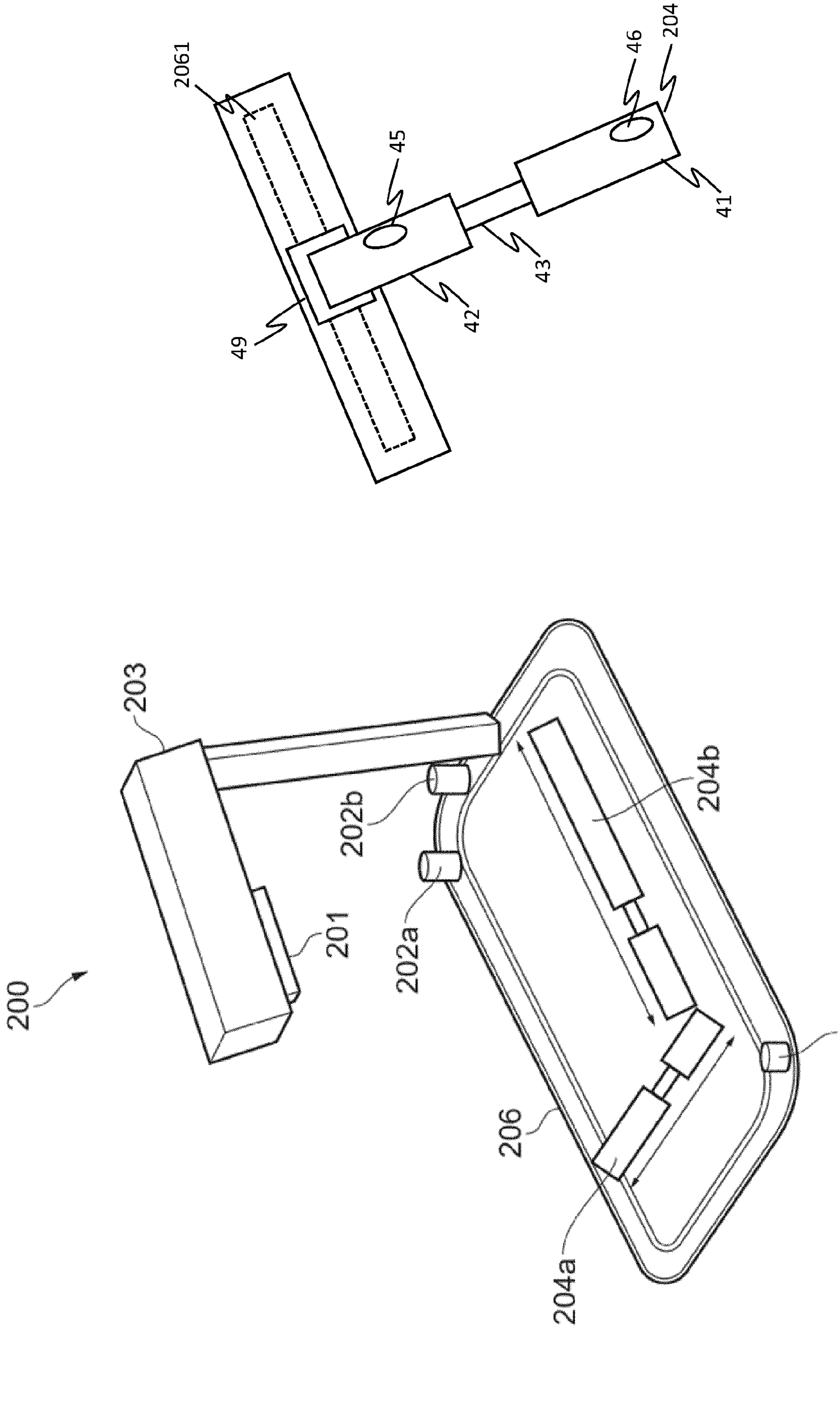
2061
45
46
204
49
42
43
41
200
203
201
202a
202b
204b
206
204a
205

FIGURE 10

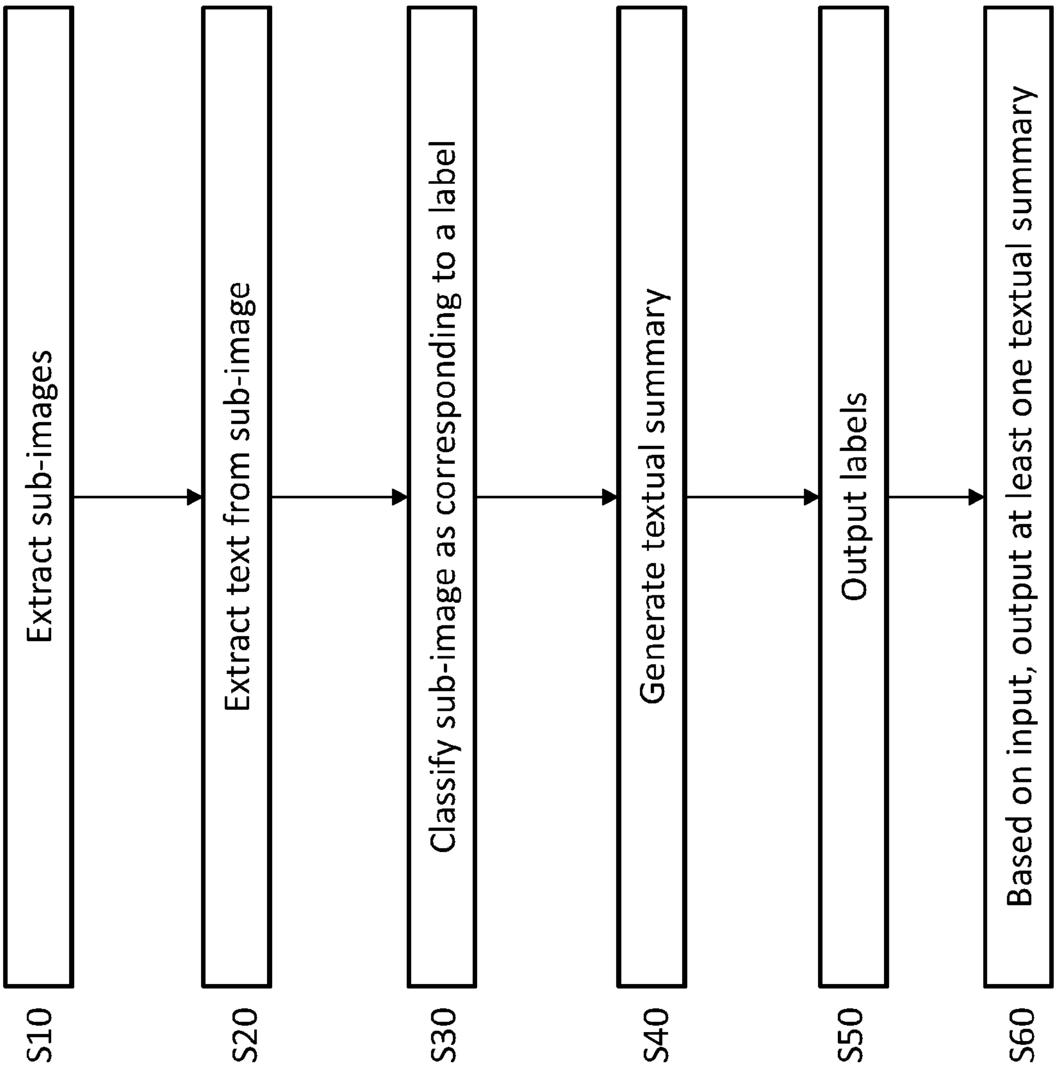
S10
Extract sub-images
S20
Extract text from sub-image
S30
Classify sub-image as corresponding to a label
S40
Generate textual summary
S50
Output labels
S60
Based on input, output at least one textual summary

FIGURE 11

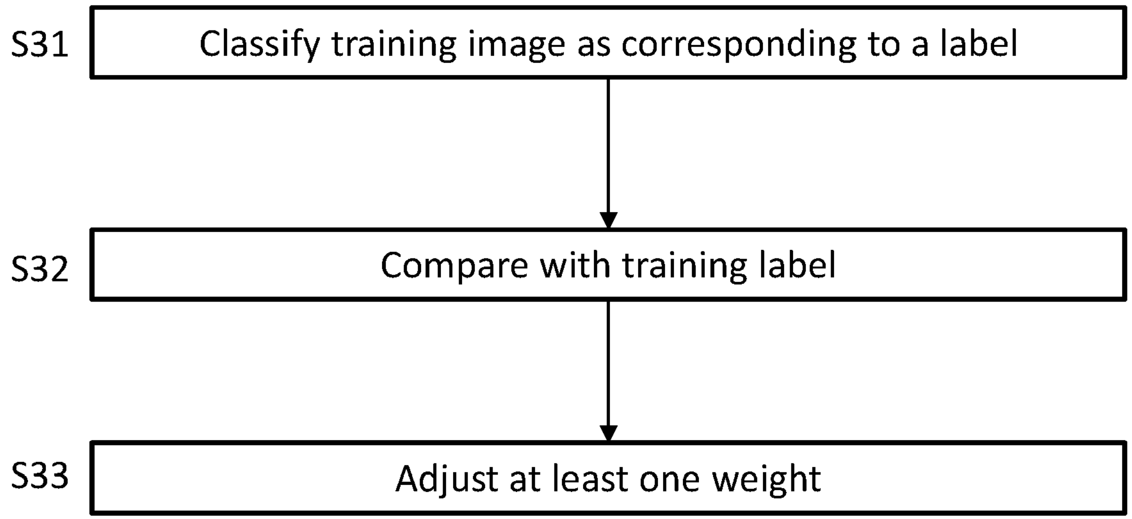
S31
Classify training image as corresponding to a label
S32
Compare with training label
S33
Adjust at least one weight

FIGURE 12

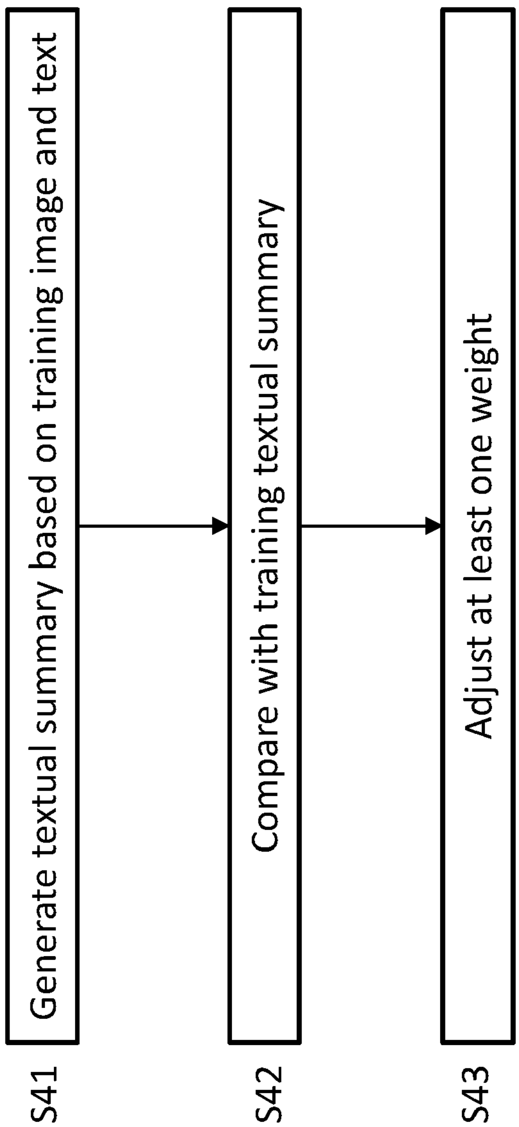
S41
Generate textual summary based on training image and text
S42
Compare with training textual summary
S43
Adjust at least one weight

FIGURE 13

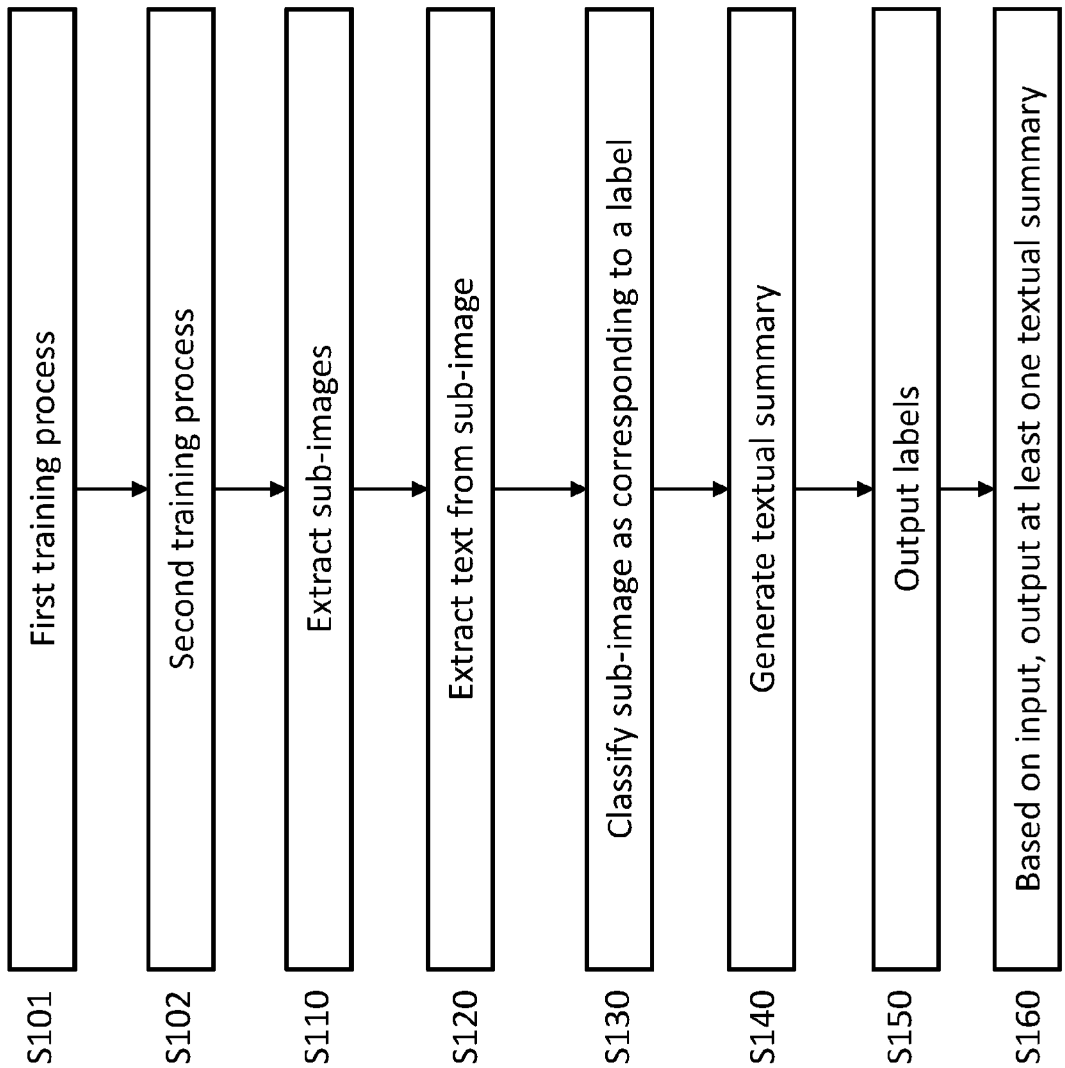
S101
First training process
S102
Second training process
S110
Extract sub-images
S120
Extract text from sub-image
S130
Classify sub-image as corresponding to a label
S140
Generate textual summary
S150
Output labels
S160
Based on input, output at least one textual summary

FIGURE 14

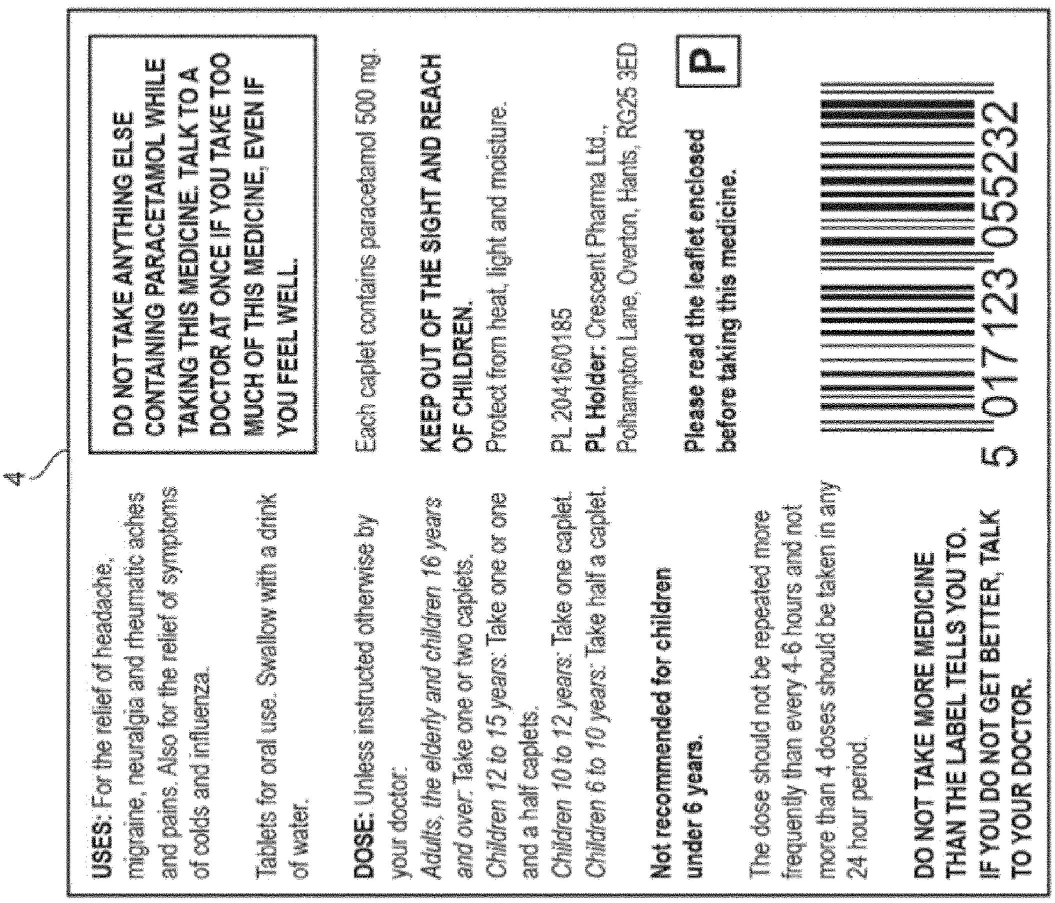
4
USES: For the relief of headache, migraine, neuralgia and rheumatic aches and pains. Also for the relief of symptoms of colds and influenza.
Tablets for oral use. Swallow with a drink of water.
DOSE: Unless instructed otherwise by your doctor:
Adults, the elderly and children 16 years and over: Take one or two caplets.
Children 12 to 15 years: Take one or one and a half caplets.
Children 10 to 12 years: Take one caplet.
Children 6 to 10 years: Take half a caplet.
Not recommended for children under 6 years.
The dose should not be repeated more frequently than every 4-6 hours and not more than 4 doses should be taken in any 24 hour period.
DO NOT TAKE MORE MEDICINE THAN THE LABEL TELLS YOU TO. IF YOU DO NOT GET BETTER, TALK TO YOUR DOCTOR.
DO NOT TAKE ANYTHING ELSE CONTAINING PARACETAMOL WHILE TAKING THIS MEDICINE. TALK TO A DOCTOR AT ONCE IF YOU TAKE TOO MUCH OF THIS MEDICINE, EVEN IF YOU FEEL WELL.
Each caplet contains paracetamol 500 mg.
KEEP OUT OF THE SIGHT AND REACH OF CHILDREN.
Protect from heat, light and moisture.
PL 20416/0185
PL Holder: Crescent Pharma Ltd., Polhampton Lane, Overton, Hants, RG25 3ED
Please read the leaflet enclosed before taking this medicine.
P
5 017123 055232

FIGURE 15

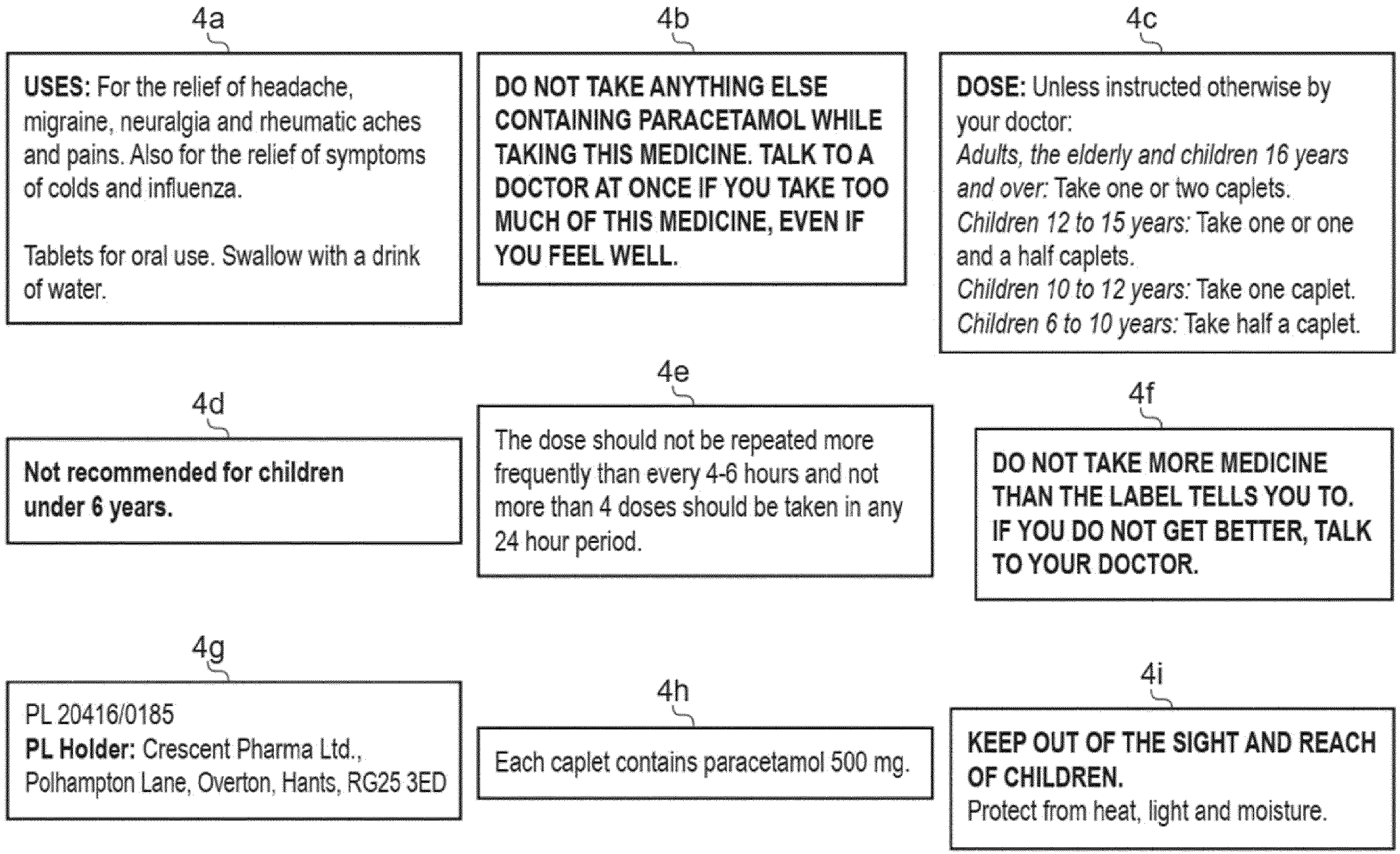
4a
USES: For the relief of headache, migraine, neuralgia and rheumatic aches and pains. Also for the relief of symptoms of colds and influenza.
Tablets for oral use. Swallow with a drink of water.
4b
DO NOT TAKE ANYTHING ELSE CONTAINING PARACETAMOL WHILE TAKING THIS MEDICINE. TALK TO A DOCTOR AT ONCE IF YOU TAKE TOO MUCH OF THIS MEDICINE, EVEN IF YOU FEEL WELL.
4c
DOSE: Unless instructed otherwise by your doctor:
Adults, the elderly and children 16 years and over: Take one or two caplets.
Children 12 to 15 years: Take one or one and a half caplets.
Children 10 to 12 years: Take one caplet.
Children 6 to 10 years: Take half a caplet.
4d
Not recommended for children under 6 years.
4e
The dose should not be repeated more frequently than every 4-6 hours and not more than 4 doses should be taken in any 24 hour period.
4f
DO NOT TAKE MORE MEDICINE THAN THE LABEL TELLS YOU TO. IF YOU DO NOT GET BETTER, TALK TO YOUR DOCTOR.
4g
PL 20416/0185
PL Holder: Crescent Pharma Ltd., Polhampton Lane, Overton, Hants, RG25 3ED
4h
Each caplet contains paracetamol 500 mg.
4i
KEEP OUT OF THE SIGHT AND REACH OF CHILDREN.
Protect from heat, light and moisture.

FIGURE 16

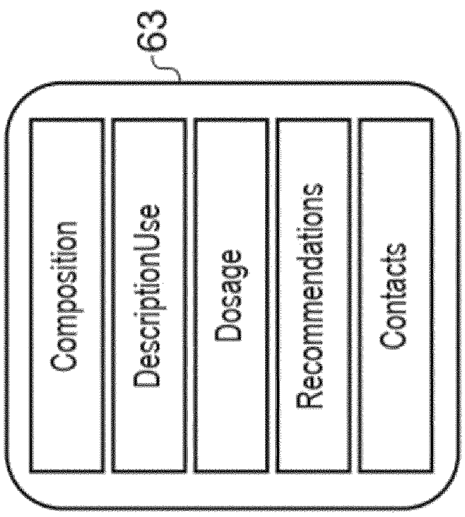
63
Composition
DescriptionUse
Dosage
Recommendations
Contacts

FIGURE 17

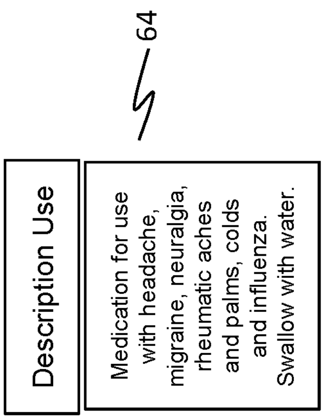
64
Description Use
Medication for use with headache, migraine, neuralgia, rheumatic aches and palms, colds and influenza. Swallow with water.

FIGURE 18

**Image Layout**

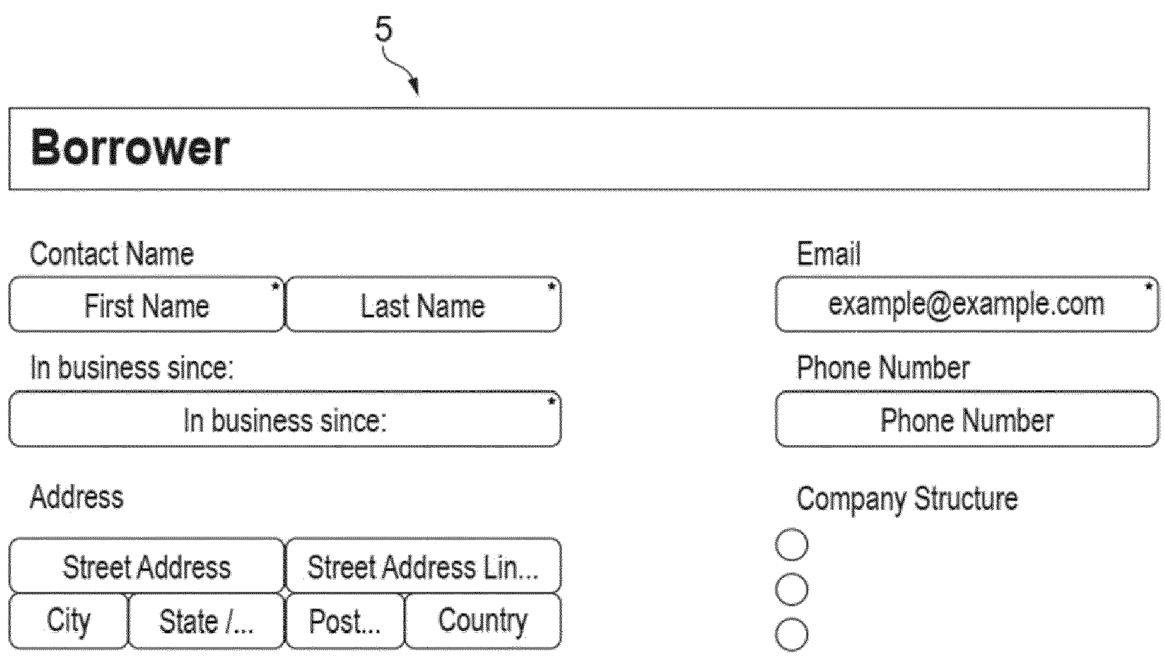


**Plain text**

Borrower Contact Name
First Name Last Name
Email ...

# Label: BorrowerInfo

**Summary:** Borrower data needed is contact name, email, phone number, address,...

FIGURE 19

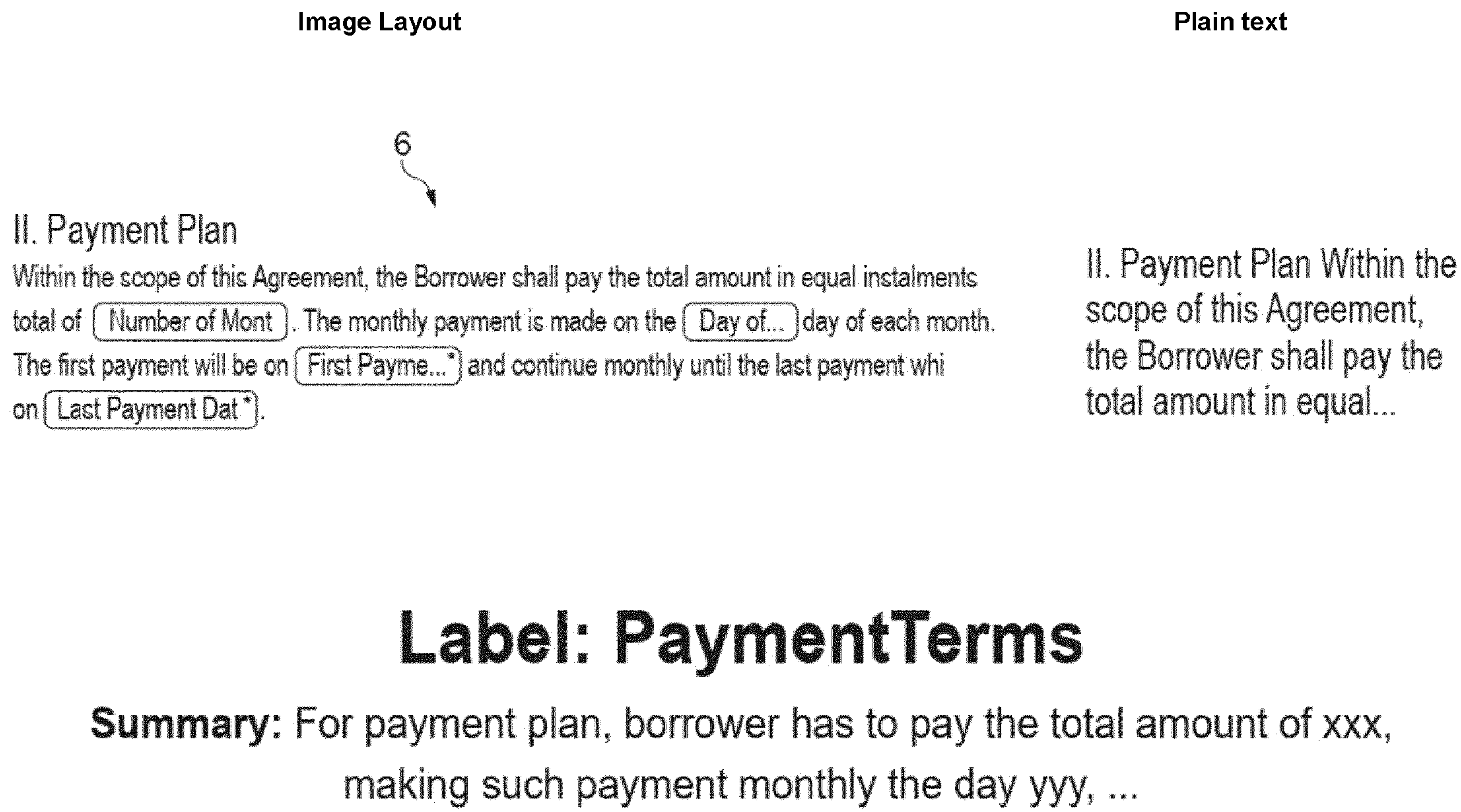
Image Layout
Plain text
6
II. Payment Plan
Within the scope of this Agreement, the Borrower shall pay the total amount in equal instalments
total of Number of Mont. The monthly payment is made on the Day of... day of each month.
The first payment will be on First Payme...* and continue monthly until the last payment whi
on Last Payment Dat*.
II. Payment Plan Within the scope of this Agreement, the Borrower shall pay the total amount in equal...
Label: PaymentTerms
Summary: For payment plan, borrower has to pay the total amount of xxx, making such payment monthly the day yyy, ...

FIGURE 20

**Image Layout**

7

**Details of Loan: Agreed Between Borrower and Lender:**

| | |
|---|---|
| Amount of | Loan: $ ________ |
| Other | (Describe) $ ________ |
| Amount | financed: $ ________ |
| Finance * | charge: $ ________ |
| Total of payments | $ ________ |
| ANNUAL PERCENTAGE RATE ________ % | |

**Plain text**

Details of Loan: Agreed Between Borrower and Lender: Amount of Loan: $...

# Label: LoanDetails

**Summary:** The borrower and lender has agreed an amount of loan of $xxx in a total payments of...

FIGURE 21

8

# LOAN AGREEMENT

This LOAN AGREEMENT ("Loan Agreement" or "Agreement") between Elizabeth Smith of 4601 Amethyst Drive, Memphis, Tennessee 38104, United States, a/an individual, hereinafter referred to individually and collectively as the "Lender" and Luis Reyes of 2674 Franklin Street, Memphis, Tennessee 38104, United States, a/an individual, hereinafter referred to individually and collectively as the "Borrower" entered into this agreement on 10/04/2021, who agree to be bound by the terms of this Loan Agreement and do hereby agree as follows.

Whereas, for the value received, the Borrower promises to pay the Lender the sum as identified below from the date hereof until the sum owed is paid in full, as provided herein and upon the following terms and conditions.

**I. AMOUNT OF LOAN.**

The Borrower hereby agrees and acknowledges that they owe the lender $10,000.00 (the "Loan") with interest on the unpaid Loan at the rate of 10% per annum, which must be less than the applicable usury rate of the applicable law of the state as defined below.

**II. PAYMENT.**

The Borrower agrees to make instalment payments toward the principal and any accrued interest as follows:

- Once per month beginning on 10/01/2021 and payment is due every thirty (30) days until the balance is paid in full.

All payments made by the Borrower are to be applied first to any accrued interest and then the principal balance. The total amount of the loan shall be due and payable on the 1st of January, 2025.

**III. METHOD OF PAYMENT.**

Payments shall be delivered to the Lender at the address shown above via Check.

**IV. PREPAYMENT.**

The Borrower can pay off the loan in full or make additional payments at any time and no prepayment penalty shall apply. Borrower agrees that if they prepay part of the loan, they will continue to make regularly scheduled payments until all amounts due under this agreement are paid in full.

Page 1 of 4

FIGURE 22

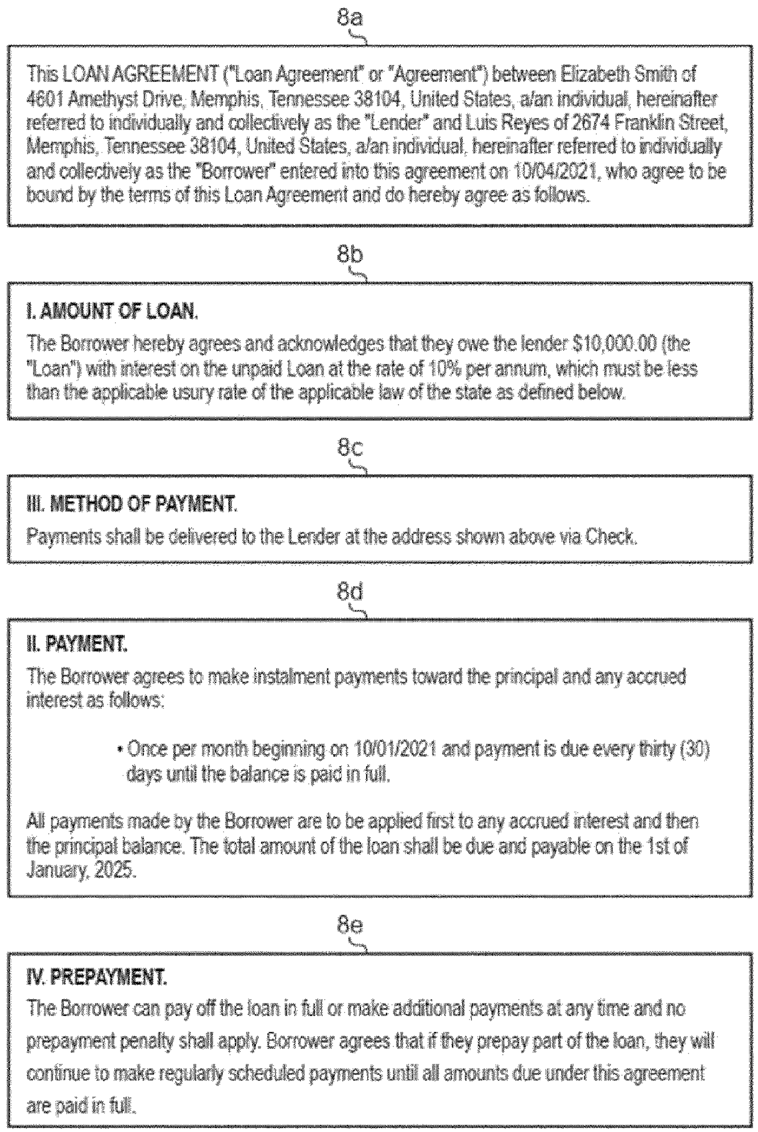
8a
This LOAN AGREEMENT ("Loan Agreement" or "Agreement") between Elizabeth Smith of 4601 Amethyst Drive, Memphis, Tennessee 38104, United States, a/an individual, hereinafter referred to individually and collectively as the "Lender" and Luis Reyes of 2674 Franklin Street, Memphis, Tennessee 38104, United States, a/an individual, hereinafter referred to individually and collectively as the "Borrower" entered into this agreement on 10/04/2021, who agree to be bound by the terms of this Loan Agreement and do hereby agree as follows.
8b
I. AMOUNT OF LOAN.
The Borrower hereby agrees and acknowledges that they owe the lender $10,000.00 (the "Loan") with interest on the unpaid Loan at the rate of 10% per annum, which must be less than the applicable usury rate of the applicable law of the state as defined below.
8c
III. METHOD OF PAYMENT.
Payments shall be delivered to the Lender at the address shown above via Check.
8d
II. PAYMENT.
The Borrower agrees to make instalment payments toward the principal and any accrued interest as follows:
• Once per month beginning on 10/01/2021 and payment is due every thirty (30) days until the balance is paid in full.
All payments made by the Borrower are to be applied first to any accrued interest and then the principal balance. The total amount of the loan shall be due and payable on the 1st of January, 2025.
8e
IV. PREPAYMENT.
The Borrower can pay off the loan in full or make additional payments at any time and no prepayment penalty shall apply. Borrower agrees that if they prepay part of the loan, they will continue to make regularly scheduled payments until all amounts due under this agreement are paid in full.

FIGURE 23

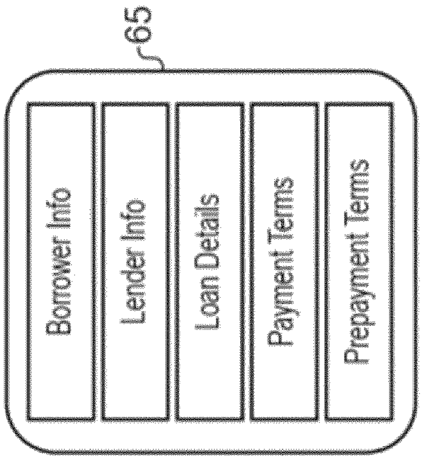
65
Borrower Info
Lender Info
Loan Details
Payment Terms
Prepayment Terms

FIGURE 24

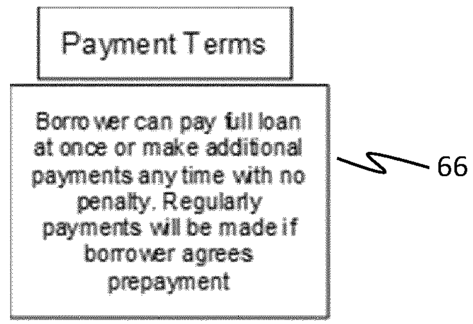
Payment Terms
Borrower can pay full loan at once or make additional payments any time with no penalty. Regularly payments will be made if borrower agrees prepayment
66

FIGURE 25

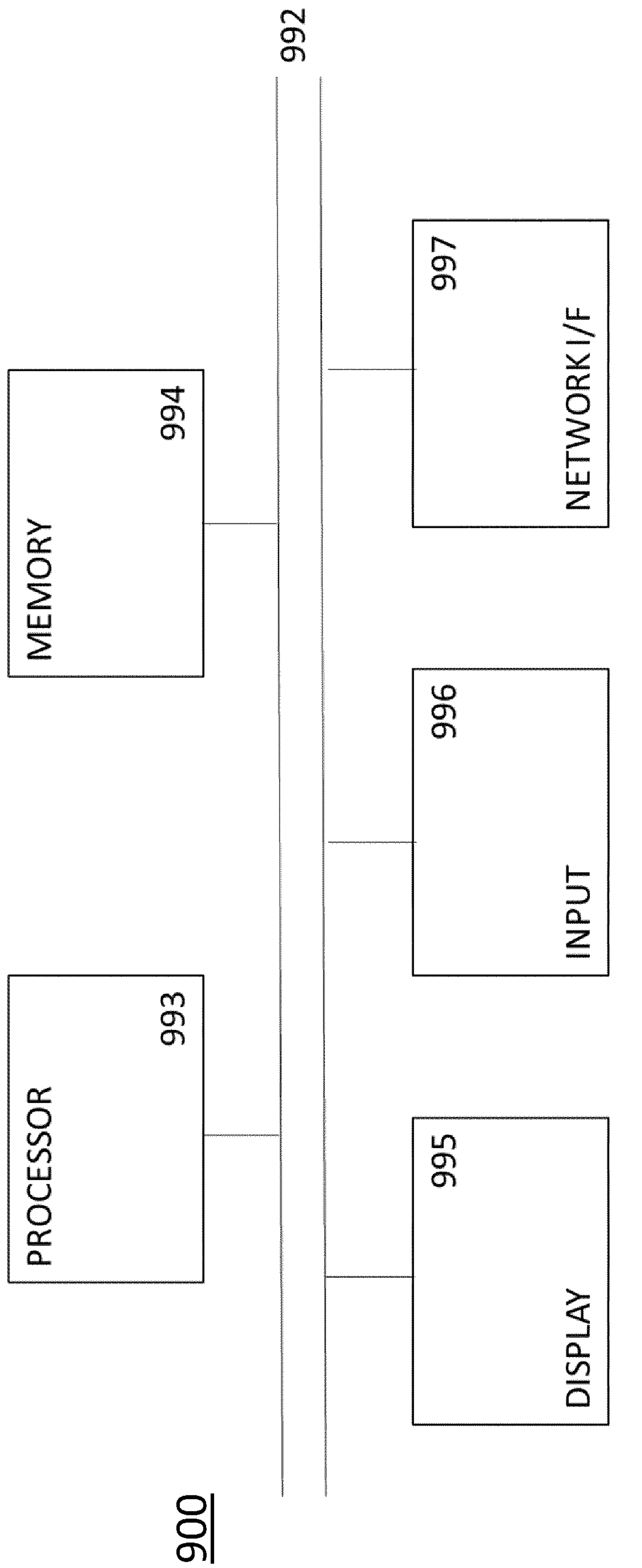
900
992
PROCESSOR
993
MEMORY
994
DISPLAY
995
INPUT
996
NETWORK I/F
997

FIGURE 26

Europäisches Patentamt
European Patent Office
Office européen des brevets

# EUROPEAN SEARCH REPORT

Application Number
EP 24 38 2332

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | CHEN JINGQIANG ET AL: "Extractive summarization of documents with images based on multi-modal RNN", FUTURE GENERATION COMPUTER SYSTEMS, ELSEVIER SCIENCE PUBLISHERS. AMSTERDAM, NL, vol. 99, 25 April 2019 (2019-04-25), pages 186-196, XP085913306, ISSN: 0167-739X, DOI: 10.1016/J.FUTURE.2019.04.045 [retrieved on 2019-04-25] * the whole document * ----- | 1-15 | INV. G06V10/82 G06V30/41 G06V30/413 |
| A | DUTTA SUBHAYU ET AL: "VisFormers-Combining Vision and Transformers for Enhanced Complex Document Classification", MACHINE LEARNING AND KNOWLEDGE EXTRACTION, vol. 6, no. 1, 16 February 2024 (2024-02-16), pages 448-463, XP093194242, ISSN: 2504-4990, DOI: 10.3390/make6010023 * abstract * * figure 1 * ----- | 1-15 | |
| | | | TECHNICAL FIELDS SEARCHED (IPC) |
| | | | G06V |

The present search report has been drawn up for all claims

1

| Place of search | Date of completion of the search | Examiner |
|---|---|---|
| The Hague | 12 August 2024 | Philips, Petra |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
& : member of the same patent family, corresponding document

EPO FORM 1503 03.82 (P04C01)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Non-patent literature cited in the description


- **AKBARI, H et al.** VATT: Transformers for multimodal self-supervised learning from raw video, audio and text. *Advances in Neural Information Processing Systems*, 2021, vol. 34, 24206-24221